# EUROPEAN PATENT APPLICATION

(11) **EP 1 862 119 A1**
(43) Date of publication of application: **05.12.2007**
(21) Application number: 06730093.9
(22) Date of filing: 27.03.2006
(51) Int. Cl.: A61B 6/00, G01T 1/00, G01T 1/17, G01T 1/175, G03B 42/02, H04N 5/32

(54) **RADIOGRAPH CAPTURING SYSTEM, CONSOLE, PROGRAM EXECUTED IN CONSOLE, CASSETTE, AND PROGRAM EXECUTED IN CASSETTE**

(30) Priority: 25.03.2005 JP 2005088840
(71) Applicant: Konica Minolta Medical & Graphic, Inc., Tokyo 191-8511 (JP)
(72) Inventor: TAMAKOSHI, Yasuaki, Tokyo, 1918511 (JP)
(74) Representative: Roberts, Mark Peter
(86) International application number: PCT/JP2006/306145
(87) International publication number: WO 2006/101232

(57) **Abstract**

A radiographic imaging system including: a cassette including radiographic image obtaining means for obtaining radiographic image data by radiographing, a memory for storing the radiographic image data obtained by the radiographic image obtaining means, and cassette communication means for communicating the radiographic image data stored in the memory with the console; and the console comprising console communication means for communicating with the cassette, and console power supply means for supplying power to the console communication means, wherein when the radiographic image data which is not transmitted to the console does not exist in the memory, the console power supply means stops supplying of power.

## Description

### Technical Field

The present invention relates to a radiographic imaging system, a console, a program executed in the console, a cassette, and a program executed in the cassette, and more particularly to a radiographic imaging system which includes a cassette equipped with an internal power source.

### Background Art

Conventionally, a radiographic image represented by an X-ray image has been in wide use for medical diagnosis. The X-ray image is an image obtained by irradiating a subject with an X-ray according to the intensity distribution of the X-ray passed through this subject.

To obtain the X-ray image, radiographing devices using computer radiography (CR) and a film have been known. However, because the X-ray imaging system using the CR is designed to obtain an X-ray image by irradiating the subject with an X-ray to execute radiographing and then scanning a phosphor plate with an excitation light to read a photostimulable light, several tens of seconds to several minutes are necessary to obtain the X-ray image from X-ray radiographing.

Therefore, in recent years, to obtain an X-ray image, an X-ray imaging system which uses a flat panel detector (FPD) for detecting an X-ray passed through a subject and converting the X-ray into an electric signal to store the signal as X-ray image information has been proposed. According to this X-ray imaging system using the FPD, an X-ray image can be obtained within several seconds or less after the subject is irradiated with a radioactive ray to execute radiographing.

Additionally, a technology of a cassette which incorporates a FPD and includes a radio communication unit and an internal power source has been disclosed (e.g., refer to Patent Document 1). This cassette can communicate with a console by radio and supply power from the internal power source of the cassette, and has advantages of high handleability and portability.
Furthermore, a technology of a cassette in which a connector capable of connecting the cassette having an internal power source with one of a radio module and a cable is provided, has been disclosed (e.g., refer to Patent Document 2). Accordingly, an operator can select that the cassette connects with the radio module to execute radiographic imaging in a cableless state of high handleability or that the cassette connects with the cable to execute continuous radiographing many times without considering a capacity of the internal power source.
Patent Document 1: Japanese Patent Application Laid-Open No. 2004-180931
Patent Document 2: Japanese Patent Application Laid-Open No. 2004-173907 (corresponding to US Patent Application Publication No. 2004-114725)

### Disclosure of the Invention

### Problems to be Solved by the Invention

However, the technology disclosed in the Patent Document 1 or 2 (in the case of the Patent Document 2, the case where the radio module is connected, and the case where either the radio module or the cable are not connected) has a problem that even when the power supply means of the console communicating with the cassette stops supplying of power, the cassette continuously consumers power supplied from the internal power source, and necessary power-is not left when the radiographing is executed.
Each of the technologies disclosed in the Patent Documents 1 and 2 has a problem that because a stop operation of a console power source is not associated with an operation of the cassette corresponding to the console, there is some possibility that radiographic image data which is not transmitted to the console after an image is obtained exists in the cassette corresponding to the stopped console power source. When the console power source is stopped while non-transmitted radiographic image data exists in the cassette, the radiographic image cannot be transmitted from the cassette to the console. Thus, there is a risk that the image data is left in an unconfirmed state for a long time or the radiographic image data stored in the memory is lost while the data is left for a long time.

The present invention has been developed to solve the aforementioned problems.

### Brief Description of the Drawings

[FIG. 1] This is a diagram showing a schematic configuration of an X-ray imaging system according to a first embodiment.
[FIG. 2] This is a perspective diagram showing a schematic configuration of a cassette according to the first embodiment.
[FIG. 3] This is a sectional diagram of the cassette focusing on a panel according to the first embodiment.
[FIG. 4] This is a circuit diagram showing a configuration of a circuit focusing on a photodetector according to the first embodiment.
[FIG. 5] This is a flowchart of a console control unit when a console power source is stopped according to the first embodiment.
[FIG. 6] This is a flowchart of a cassette control unit when the console power source is stopped according to the first embodiment.
[FIG. 7] This is a diagram showing a schematic configuration of an X-ray imaging system according to a second embodiment.
[FIG. 8] This is a subflowchart of a console control unit when a console power source is stopped according to a third embodiment.
[FIG. 9] This is a flowchart of a cassette control unit when the console power source is stoppted according to the third embodiment.

### Best Mode for Carrying out the Invention

The terms will be described below.
Radioactive rays are electromagnetic waves or particle beams of strong ionization or fluorescence actions. X-rays, γ-rays, β-rays, α-rays, proton beams, deuteron beams, and heavy charged particle beams, and neutron beams can be exemplified. According to the present invention, as radioactive rays, electron beams, X-rays, and γ-rays are preferable, especially X-rays are preferable.
A console is a device which enables an operator to communicate with a cassette. A separate display device or operation device may be connectable to the console, or a display device or an operation device may be integrated with the console.

The embodiments of the present invention will be described below with reference to the accompanying drawings. Needless to say, however, the invention is not limited to the embodiments.
The description of the embodiments of the invention indicates modes recognized as the best mode to carry out the invention by the inventors. Some expressions may seemingly determine or define terms used within a scope of the invention or claims. However, these expressions are ones for only specifying modes recognized as the best modes by the inventors, and are not ones for specifying or limiting the terms used in the scope of the invention or the claims.

### [First Embodiment]

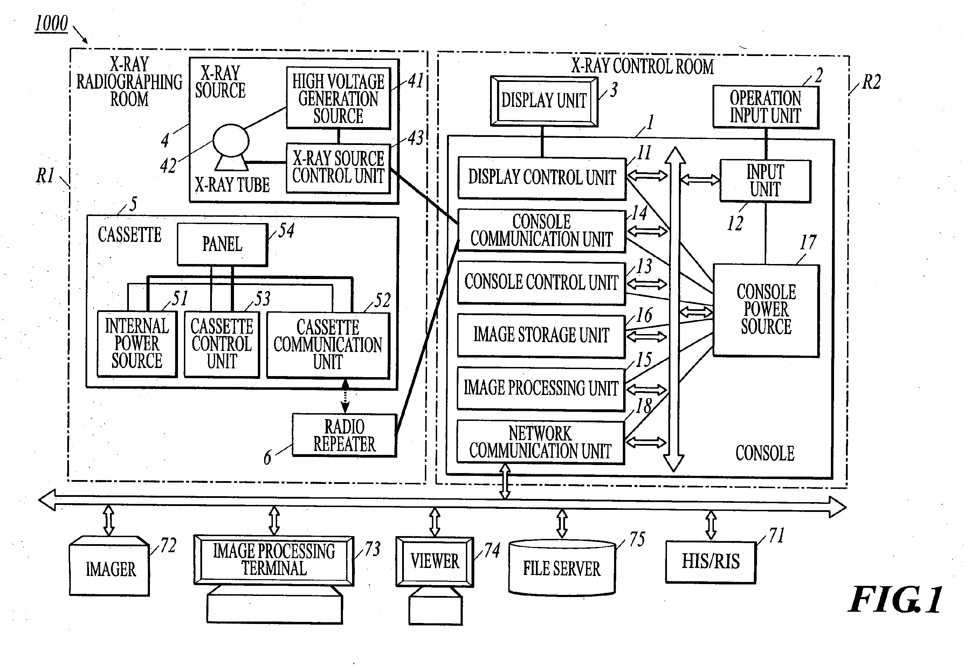

Referring to FIGS. 1 to 6, an X-ray imaging system according to a first embodiment of the present invention will be described. An X-ray is a kind of radioactive ray.

As shown in FIG. 1, an X-ray imaging system 1000 of the first embodiment is a system which assumes X-ray imaging performed in a hospital, and for example, arranged in an X-ray radiographing room R1 for irradiating a subject with X-rays, and an X-ray control room R2 for controlling X-rays with which the subject is irradiated by an X-ray engineer or executing the image processing for an X-ray image obtained by irradiating a subject with X-rays.

A console 1 is disposed in the X-ray control room R2. The entire X-ray imaging system is controlled by this console 1 to execute the controlling of X-ray imaging or the image processing for an X-ray image. The console 1 is a device by which an operator communicates with a cassette, and a separate display device or operation device may be connected, or the display device or the operation device may be integral.
An operation input unit 2 by which the operator inputs a radiographing preparation instruction, a radiographing instruction, or instruction contents is connected to the console 1. For the operation input unit 2, for example, an X-ray irradiation request switch, a touch panel, a mouse, a keyboard, a joystick, or the like can be used. Via the operation input unit 2, X-ray radiographing conditions such as an X-ray tube voltage, an X-ray tube current, or X-ray irradiation time, X-ray radiographing control conditions such as radiographing timing, a radiographing region, or a radiographing method, image processing conditions, image output conditions, and instruction contents such as cassette selection information, order selection information, or a subject ID are input to the console 1.
Further, a display unit 3 for displaying an X-ray image or the like is connected to the console 1. Displaying of the display unit 3 is controlled by a display control unit 11 which constitutes the console 1. For the display unit 3, for example, a monitor such as a liquid crystal monitor or a cathode ray tube (CRT) monitor, electronic paper, an electronic film or the like can be used. Characters such as X-ray radiographing conditions or image processing conditions, and X-ray images are displayed in the display unit 3.

The console 1 includes a display control unit 11, an input unit 12, a console control unit 13, a console communication unit 14, an image processing unit 15, an image storage unit 16, a console power source unit 17, and a network communication unit 18 and the like. The display 11, the input unit 12, the console control unit 13, the console communication unit 14, the image processing unit 15, the image storage unit 16, the console power source unit 17, and the network communication unit 18 are connected to a bus to exchange data.

The input unit 12 receives instruction contents from the operation input unit 2.

The console control unit 13 decides radiographing conditions based on the instruction contents received by the input unit 12 or order information of HIS/RIS 71. The console communication unit 14 transmits radiographing condition information regarding radiographing conditions to an X-ray source 4 and a cassette 5, and the console control unit 13 controls the X-ray source 4 and the cassette 5 to execute X-ray imaging. The console control unit 13 temporarily stores X-ray image data received by the console communication unit 14 from the cassette 5 in the image storage unit 16. The console control unit 13 controls the image processing unit 15 to generate thumbnail image data from the X-ray image data temporarily stored in the image storage unit 16. The display control unit 11 controls the display unit 3 to display a thumbnail image based on the generated thumbnail image data. The console control unit 13 controls the image processing unit 15 to execute image processing for the X-ray image data based on the instruction contents received by the input unit 12 or the order information of the HIS/RIS 71, and the image storage unit 16 to store the X-ray image data for which the image processing is executed. The display control unit 11 is controlled to display a thumbnail image of a processing result in the display unit 3 based on X-ray image data which is a result of the image processing of the image processing unit 15. The console control unit 13 controls the image processing unit 15 to execute image processing again for the X-ray image data based on instruction contents subsequently received by the input unit 12 from the operation input unit 2, and the display control unit 11 to display the image processing result in the display unit 3, or transfers, stores or displays the X-ray image data in an external device of the network.
For the console control unit 13, a mother board on which a central processing unit (CPU) and a memory such as a random access memory (RAM) or a read only memory (ROM) (these are not shown) are mounted can be applied.
The CPU reads a program stored in the ROM or a hard disk, expands the program in the RAM, and controls each unit of the console 1, the X-ray source 4, the cassette 5, and the external device according to the expand program. The CPU reads various processing programs including a system program stored in the ROM or the hard disk, and expands the programs in the RAM to execute various processes described below.
The RAM is a volatile memory to form a work area for temporarily storing various programs read from the ROM and executed by the CPU, or input or output data in various processes executed and controlled by the CPU of the console control unit 13.
For example, the ROM is a nonvolatile memory to store a system program executed by the CPU and various programs corresponding to the system program. These various-programs are stored in the form of readable program codes, and the CPU sequentially executes operations according to the program codes.
A hard disk may be used in place of the ROM. In this case, the hard disk stores the system program and various application programs executed by the CPU. The hard disk may receive and store some or all of various application programs such as programs of the invention from the console communication unit 14 via a transmission medium of a network line from the other device such as a server. The CPU may receive various application programs such as programs of the invention from a storage device such as a hard disk of the server disposed in the network, and expand the programs in the RAM to execute various processes such as processes of the invention.

The display unit 11 controls the display unit 3 to display images or characters based on image data or character data under the control of the console control unit 13. For the display control unit 11, a graphic board or the like can be used.
The console communication unit 14 is connected to the X-ray source 4 and the radio repeater 6 via a communication cable. The console communication unit 14 can communicate with the cassette 5 via the radio repeater 6. The console communication unit 14 can transmit a control signal based on instruction contents to the X-ray source 4 and the cassette 5 through analog or digital communication, and receive X-ray image data from the cassette 5.
The communication cable for connecting the console communication unit 14 to the X-ray source 4 and the radio repeater 6 can be detached. When the communication cable is connected, as image transfer can be carried out at a high speed, X-ray image acquisition, X-ray image processing, X-ray image checking or the like by X-ray radiographing can be carried out within a short time.

The image processing unit 15 executes the image processing for the X-ray image data received by the console communication unit 14 from the cassette 5. In the image processing unit 15, based on the instruction contents, the image processing such as correction processing of image data, expansion and compression processing, space filtering processing, recursive processing, gradation processing, scattered ray correction processing, grid correction processing, frequency emphasis processing, or dynamic range (DR) compression processing is carried out.

The image storage unit 16 includes a storage deice for storing X-ray image data, and temporarily stores the X-ray image data received by the console communication unit 14 from the cassette 5, or stores the X-ray image data for which the image processing is executed. For the image storage unit 16, a hard disk which is a large capacity and high speed storage device, a hard disk array such as a redundant array of independent disks (RAID), or silicon disk can be used.

The console power source unit 17 receives power supplied from an external power source (not shown) such as an AC power source, or an internal power source (not shown) such as a battery or a cell, and supplies power to each unit constituting the console 1.
The external power source of the console power source unit 17 can be detached. When power is supplied to the console power source unit 17 from the external power source, long-time radiographing can be carried out because no charging is necessary.

The network communication unit 18 communicates various pieces of information between the console 1 and the external device through a local area network (LAN). For the external device, for example, a hospital information system/radiology information system (HIS/RIS) terminal 71, an imager 72, an image processing device 73, a viewer 74, or a file server 75 can be connected. The network communication unit 18 outputs the X-ray image data to the external device according to a predetermined protocol such as digital imaging and communications in medicine (DICOM).
The HIS/RIS terminal 71 obtains information of a subject or information regarding a radiographing region or method, and provides the information to the console 1. The imager 72 records an X-ray image in an image recording medium such as a film based on X-ray image data output from the console 1. The image processing device 73 execute the image processing for the X-ray image data output from the console 1 or processing for computer aided diagnosis (CAD), and stores a result in the file server 75. The viewer 74 displays the X-ray image based on the X-ray image data output from the console 1. The file server 75 is a file server for storing X-ray image data for which the image processing is executed. The network communication unit 18 outputs the X-ray image data to the external device according to a predetermined protocol such as digital imaging and communications in medicine (DICOM).
The embodiment is an example where the display control unit 11 and the console control unit 13 are separately provided. However, the display control unit and the console control unit may be integral. For example, a mother board on which a CPU and a memory are mounted may be used for the console control unit, and a graphic subsystem incorporated in the mother board may be used for the display control unit. The console control unit 13 may serve also as a display control unit. According to the embodiment, the image processing unit 15 is separate from the console control unit 13. However, the console control unit 13 may serve also as an image processing unit.

In the X-ray radiographing room R1, the X-ray source 4 for irradiating the subject with X-rays, and the cassette 5 for obtaining X-ray image data by detecting the X-rays with which the subject is irradiated are arranged. The X-ray radiographing room R1 is a room covered with an X-ray shielding member to prevent leakage of X-rays of the X-ray source 4 to the outside of the X-ray radiographing room R1. The cassette 5 is portable, and can be carried even to the outside of the X-ray radiographing room R1.
Further, the radio repeater 6 is arranged in the X-ray radiographing room R1. The radio repeater 6 communicates with the cassette 5 by radio. Accordingly, for communication between the cassette 5 and the radio repeater 6, no communication cable is necessary, and a situation of handling the cassette 5 while taking care not to twine the cable with the subject during X-ray radiographing can be prevented.
There are various types of radio communications. As means for communicating radiographic image data, optical communication (communication by terra wave, infrared wave, visible light, or ultraviolet ray), or communication by electric waves, for example, is preferable. However, the means is not limited to these.
For the communication by electric waves, a transmission method by an electric wave of a frequency exceeding 1 GHZ and a communication method using an electric wave of a frequency of 1 GHz or less are available. For the communication to transmit radiographic image data obtained by the radiographic image obtaining means of the invention, the method of communication using the electric wave of the frequency exceeding 1 GHz is preferably used.
The transmission method by the electric wave of the frequency exceeding 1 GHz includes, for example, a method by a wireless LAN compliant with wireless LAN Standard (ARIB STD-T74) of 156 Mbps full duplex (312 Mbps) utilizing a 60 GHz band or RCRSTD-34 Standard which enables high-speed (25 Mbps) communication utilizing a 19 GHz band, a method using fixed wireless access (FWA) utilizing a 18 or 19 GHz band, a method by a next-generation portable telephone utilizing a 1.4 GHz band, a 2 GHz band or a 2.1 GHz band, a method by a wireless LAN compliant with Standard such as IEEE 802. 11a, 802. 11b, or 802. 11g and using a 2.4 GHz band or a 5.2 GHz band, a method based on a radio communication standard such as a method using Bluetooth utilizing a 2.45 GHz band or a home radio frequency (HomeRF) utilizing a 2.4 GHz band, a communication method using an electric wave of an ultra wide band (UWB), and a method using an industrial, scientific and medical band (ISM) utilizing a 2.4 GHz band or a 5.8 GHz band. For the electric wave of the frequency exceeding a 1 GHz band, an electric wave of a frequency equal to or more than 2 GHz (especially equal to or more than 5 GHz) from the standpoint of an information transmission capacity is preferable. From the standpoint of lower costs and miniaturization of the communication circuit, an electric wave of 3×10² GHz or less (especially 3×10 GHz or less) is preferable.
The communication method using an electric wave of a frequency of 1 GHz or less includes, for example, a method by specific small power radio using a 7×10 MHz or 4×10² MHz band, a method by PHS, and a method by a portable telephone using an 8×10² or 9×10² MHz band. For the electric wave of the frequency of 1 GHz or less, from the standpoint of electric wave wraparound, an electric wave of a frequency of 8×10² MHz or less (especially 4×10² MHz or less) is preferable. From the standpoint of antenna miniaturization, an electric wave of a frequency of 3×10 MHz or more (especially 1×10² MHz or more) is preferable.
Radio communication between the console and the cassette by such electric waves may take a form where the console and the cassette directly communicate with each other by radio, or a form where a radio repeater is disposed in the midway, and radio communication is executed via the radio repeater. Radio communication by such electric waves may be analog communication or digital communication.
The method of communication using a light includes a method using an optical wireless LAN, and a method using near infrared rays based on IrDA Standard. However, the method is not limited to these. For the method using the optical wireless LAN, a method which connects a repeater to a wired LAN and communicates via an optical communication hub is available.
The radio repeater 6 communicates with the console 1 via a communication cable. Image data obtained by the cassette 5 is transmitted to the console 1 via the radio repeater 6, or a control signal or various pieces of information are communicated between the console 1 and the cassette 5. Accordingly, because the console 1 and the radio repeated 6 are interconnected by the cable, and the radio repeater 6 is arranged in the radiographing room R1, even when the cassette 5 is used in the radiographing room R1 separated from the console 1 by a radiation shielding member, good radio communication can be carried out.
The radio repeater 6 may have a function of a charger of the cassette 5 and a function of a holder when the cassette 5 is unused. Preferably, the radio repeater 6 includes a connector, and the radio repeater 6 where the internal power source 51 of the cassette 5 is charged when the connector is connected to the cassette 5 is formed so that the cassette 5 can be easily detached. In addition to the function of the charger of the cassette 5, the radio repeater 6 has the function of a holder when the cassette 5 is unused.

In the foregoing, the console 1 is installed in the X-ray control room R2. However, the console 1 may be a portable terminal capable of radio communication. In this case, preferably, a radio repeater is also installed in the X-ray control room R2, the console communication unit 14 can communicate with both of the radio repeater 6 in the X-ray radiographing room R1 and the radio repeater in the X-ray control room R2 and, as a result, can communicate with the cassette 5 both in the X-ray radiographing room R1 and the X-ray control room R2. Thus, while giving instructions about a radiographing position of the subject or the like not only in the X-ray control room R2 as in the conventional case but also in the X-ray control room R2, a radiographer can check an X-ray image by the console 1, and start the image processing of the X-ray image data, or can check the X-ray image, and start the image processing of the X-ray image data in moving time between the X-ray radiographing room R1 and the X-ray control room R2. Therefore, it is possible to improve the total radiographing efficiency of the entire X-ray radiographing which repeats a cycle of checking the X-ray image from the X-ray radiographing.

In the X-ray source 4, a high voltage generation source 41 for generating a high voltage, and an X-ray tube 42 for generating X-rays when a high voltage is applied from the high voltage generation source 41 are disposed. An X-ray limiting device (not shown) for adjusting an X-ray application range is disposed in an X-ray application port of the X-ray tube 42. As the X-ray limiting device controls an X-ray application direction according to a control signal from the console, the X-ray application range is adjusted according to a radiographing area. Additionally, an X-ray source control unit 43 is arranged in the X-ray source 4, and the high voltage generation source 41 and the X-ray tube 42 are connected to the X-ray source control unit 43. The X-ray source control unit 43 drives and controls each unit of the X-ray source 4 based on the control signal transmitted from the console communication unit 14. In other words, the X-ray source control unit 43 controls the high voltage generation source 41 and the X-ray tube 42.

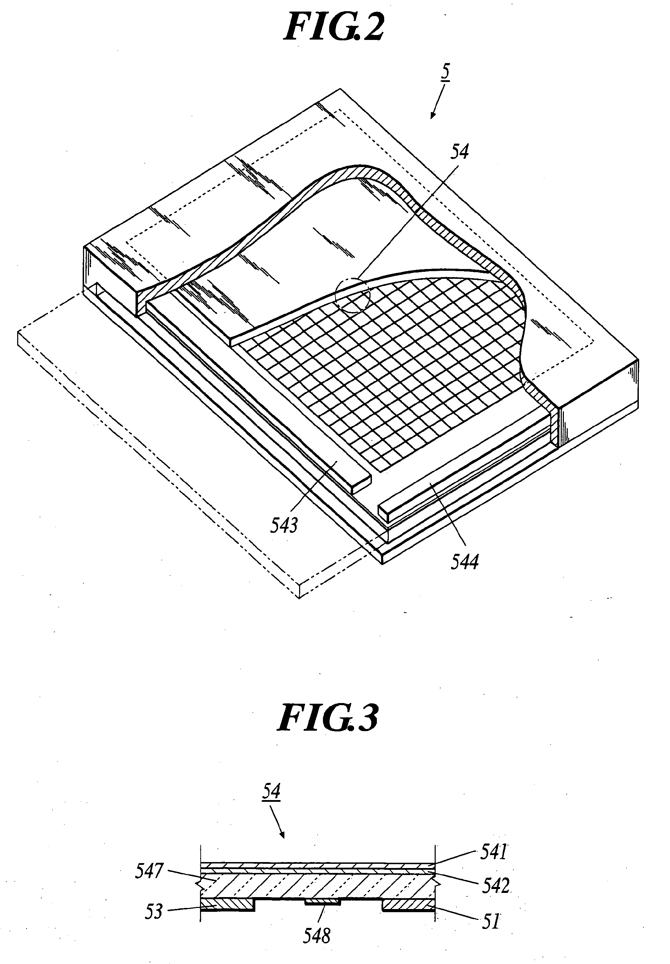

X-rays transmitted through the subject from the X-ray source 4 enters the cassette 5. As shown in FIG. 2, the cassette 5 includes a casing 55, and the inside thereof is protected by the casing 55. For the casing 55, a light metal such as aluminum or magnesium is used. By using the light metal for the casing 55, strength of the casing 55 can be maintained.
Before X-ray radiographing, positions and directions of the cassette 5 and the subject are adjusted to be set by the operator so that X-rays transmitted at a desired position/direction of the subject can be arranged. (In case of necessity, a position and a direction of the X-ray source 6 are also adjusted to be arranged). Subsequently, the X-ray source 4 generates X-rays by an instruction from the console 1. The X-rays transmitted through the subject of the desired position/direction from the X-ray source 4 are incident on the cassette 5.
An internal power source 51, a cassette communication unit 52, a cassette control unit 53, and a panel 54 are disposed in the cassette 5. The internal power source 51, the cassette communication unit 52, the cassette control unit 53, and the panel 54 are connected to a bus in the cassette 5.
A power source of the cassette 5 may be a power source unit connected to the cassette 5 via a power line, or an external power source such as an AC power source for supplying power from the outside. However, the internal power source 51 installed in the cassette 5 is preferable because the internal power source is easily handled. For the internal power source 51 installed in the cassette 5, a power source unit circumscribed in the cassette 5 may be used. However, the power source unit is preferably the internal power source 51 installed in the cassette 5.
When the internal power source 51 for supplying power is installed, the cassette 5 preferably has a plurality of different power supply states, and changes a power supply state of the cassette 5 at a proper timing. As such a power supply state, for example, a radiographable state and a state in which power consumption is lower than that of the radiographable state is preferably provided. Especially, as the state in which power consumption is lower than that of the radiographable state, a state under the control of one or more radiographing standby modes; and a state under the control of a sleep mode of a much lower power consumption is preferably provided.
A radiographing operation is an operation necessary for obtaining radiographic image data by radiographing. For example, in the case of the panel 54 of the embodiment, the operations including the initialization of the panel 54, the storage of electric energy generated by radiation irradiation, the reading of an electric signal, and the conversion of the image data are relevant.
The radiographable state is a state capable of immediately obtaining radiographic image data by this radiographing operation.

The internal power source 51 supplies power to each unit disposed in the cassette 5. The internal power source 51 includes a capacitor chargeable and capable of dealing with power consumed during the radiographing. For the capacitor, an electrolytic double layer capacitor can be applied. For the internal power source 51, a primary battery such as a manganese battery, a nickel/cadmium battery, a mercury battery, or a lead battery, or a chargeable secondary battery can be applied.
A capacity of the internal power source 51 can be converted into preferably 4 or more sheets (especially 7 or more) when X-ray images of a maximum size are continuously radiographable from the standpoint of the radiographing efficiency.
From the standpoint of the reductions in size/weight/cost, the capacity of the internal power source 51 can be converted into preferably 100 or more sheets (especially 50 times or less) when X-ray images of a maximum size are continuously radiographable.

The cassette communication unit 52 is configured to communicate with the console communication unit 14 by radio via the radio repeater 6. Signals can be received and transmitted between the cassette communication unit 52 and the console communication unit 14, and X-ray image data can be transmitted from the cassette communication unit 52 to the console communication unit 14.

The cassette control unit 53 controls each unit disposed in the cassette 5 based on a control signal received from the cassette communication unit 52.

The panel 54 outputs X-ray image data based on X-rays transmitted through the subject. The panel 5 of the embodiment is an indirect flat panel detector (FPD).

FIG. 2 is a perspective diagram showing a schematic configuration of the cassette 5, and FIG. 3 is a sectional diagram of the cassette 5 focusing on the panel 54.
The embodiment will be described by taking the examples of FIGS. 2 and 3. However, the present invention is not limited to this. The cassettes which are different in thickness or type of scintillators or in panel areas which are imaging areas can be applied. A sensitivity is higher as a scintillator is thicker, and spatial resolution is higher as a scintillator is thinner. Spectral sensitivities vary depending on types of scintillators.

In an uppermost layer of the panel 54, a scintillator 541 for detecting X-rays transmitted through the subject and converting the detected X-rays into fluorescence of a visible area (referred to as "visible light" hereinafter) extends in a layer form.
The scintillator 541 contains a phosphor as a main component. The scintillator 541 is a layer where a basic material of the phosphor is excited (absorbed) by the irradiated X-rays, and a visible light is emitted by the recoupled energy thereof. For the phosphor, for example, a phosphor for emitting fluorescence by a basic material such as CaWO₄ or CdWO₄, and a phosphor for emitting a fluorescence by luminescence center material such as CsI:TI or ZnS:Ag added in the basic material are available.

A protective layer 540 is preferably disposed on the scintillator 541. The protective layer 540 protects the scintillator 541, and completely covers an upper part and side edges of the scintillator 541. For the protective layer 540, any material can be used as long as it has an effect of moisture-proof protection of the scintillator 541. When a hygroscopic phosphor (especially alkali halide or columnar crystal phosphor made of alkali halide) is used for the scintillator 541, for example, a polyparaxylene organic film formed by a CVD method disclosed in USP 6469305, an organic film made of polymer containing silazane such as polysilazane or polysiloxazane, or a polymer compound of a siloazane type, or a moisture-proof organic film such as an organic film formed by plasma polymerization is preferably used.

Below the scintillator 541, a photodetector 542 made of amorphous silicon is stacked to extend. By this photodetector 542, a visible light emitted from the scintillator 541 is converted into electric energy to be output.
From the standpoint of diagnostic performance of an X-ray image, the panel 54 preferably includes 1000 × 1000 pixels or more (especially 2000 × 2000 pixels or more).
From the standpoint of a human visibility limit and an image processing speed for an X-ray image, the panel 54 preferably includes 10000 × 10000 pixels or less (especially 6000 × 6000 pixels or less).
From the standpoint of diagnostic performance of an X-ray image, a size of a radiographing area of the panel 54 is preferably an area of 10 cm × 10 cm or more (especially 20 cm × 20 cm or more).
From the standpoint of handleability of the cassette 5, a size of the radiographing area of the panel 54 is preferably an area of 70 cm × 70 cm or less (especially 50 cm × 50 cm or less).
From the standpoint of X-ray exposure dose reduction, a size of a pixel of the panel 54 is preferably a size of 40 µm × 40 µm or more (especially 70 µm × 70 µm or more).
From the standpoint of diagnostic performance of an X-ray image, a size of a pixel of the panel 54 is preferably 200 µm × 200 µm or less (especially 160 µm × 160 µm or less).
According to the embodiment, the panel 54 includes pixels of 4096 × 3072, an area of a radiographing area is 430 mm × 320 mm, and a size of a pixel is 105 µm × 105 µm.

The circuitry focusing on the photodetector 542 will be described.

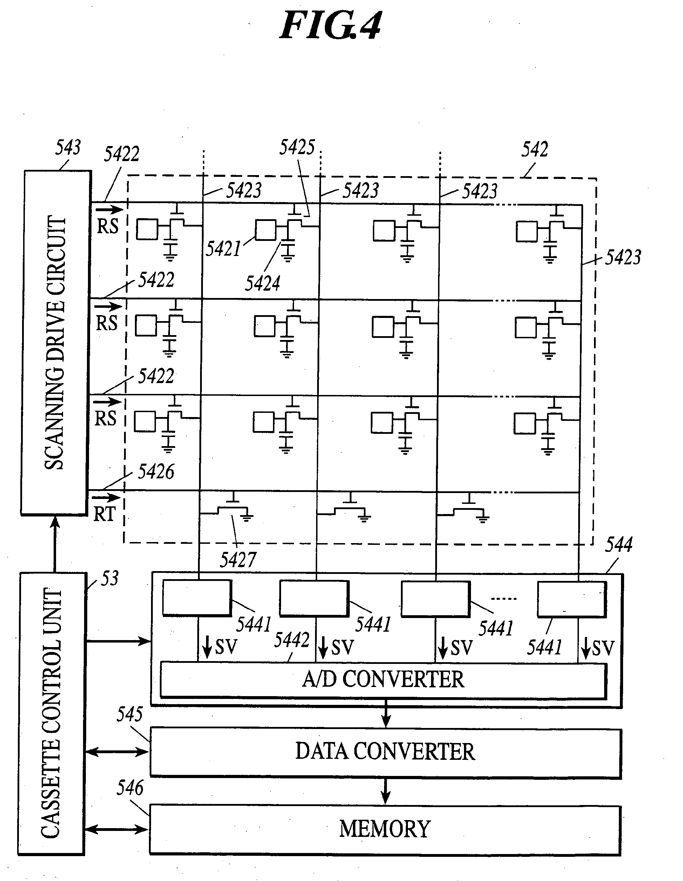

As shown in FIG. 4, the photodetector 542 includes a collection electrode 5421 which is two-dimensionally arranged to read stored electric energy according to the intensity of the irradiated X-rays. This collection electrode 5421 is one electrode of a capacitor 5424, and electric energy is stored in the capacitor 5424. One collection electrode 5421 corresponds to one pixel of X-ray image data.

A scanning line 5422 and a signal line 5423 are arranged between the collection electrodes 5421 adjacent to each other. The scanning line 5422 and the signal line 5423 are perpendicular to each other.

A switching thin film transistor 5425 (TFT, referred to as transistor hereinafter) for controlling the storing of electric energy and the reading is connected to the capacitor 5424. The transistor 5425 has a drain or source electrode connected to the collection electrode 5421, and a gate electrode connected to the scanning line 5422. When the drain electrode is connected to the scanning line 5422, the source electrode is connected to the signal line 5423. When the source electrode is connected to the collection electrode 5421, the drain electrode is connected to the signal line 5423. In the panel 21, for example, an initialization transistor 5427 having a drain electrode connected thereto is disposed in the signal line 5423. A source electrode of this transistor 5427 is grounded. A gate electrode is connected to a reset line 5426.
The transistors 5425 and 5427 are preferably configured in silicon laminated structures or include organic semiconductors.

The reset line 5426 to which a reset signal RT is transmitted from a scanning drive circuit 543 is connected to the scanning drive circuit 543 so as to be perpendicular to the signal line 5423.
The gate electrode of the initialization transistor 5427 turned ON by the reset signal RT is connected to the reset line 5426. In the initialization transistor 5427, the gate electrode is connected to the reset line 5426, the drain electrode is connected to the signal line 5423, and the source electrode is grounded. When the source electrode is connected to the signal line 5423, the drain electrode is grounded.
When the scanning drive circuit 543 supplies the reset signal RT to the initialization transistor 5427 via the reset line 5426 to turn ON the initialization transistor 5427, and a read signal RS to the transistor 5425 via the scanning line 5422 to turn ON the transistor 5425, the electric energy stored in the capacitor 5424 is discharged to the outside of the photodetector 542 via the transistor 5425. In other words, the electric energy discharged from the photodetector 542 is discharged to a ground electrode via the signal line 5423 and the initialization transistor 5427. Hereinafter, the process of supplying the reset signal RT and discharging the electric energy stored in the capacitor 5424 to the outside of the photodetector will be referred to as resetting (initialization) of the photodetector 542.
The scanning drive circuit 543 for supplying the read signal RS to the scanning line 5422 is connected to the scanning line 5422. The transistor 5425 connected to the scanning line 5422 to which the read signal RS is supplied is turned ON, and reads the electric energy stored in the capacitor 5424 connected to the transistor 5425 to supply the energy to the signal line 5423. In other words, the scanning drive circuit 543 can generate a signal for each pixel of X-ray image data by driving the transistor 5425.

A signal read circuit 544 is connected to the signal line 5423. The electric energy stored in the capacitor 5424 and then read out to the signal line 5423 is supplied to this signal read circuit 544. The signal read circuit 544 includes a signal converter 5411 for supplying a voltage signal SV proportional to the amount of electric energy supplied to the signal read circuit 544 to an A/D converter 5442, and the A/D converter 5442 for converting the voltage signal SV from the signal converter 5441 into a digital signal to supply the signal to a data conversion unit 545.

The data conversion unit 545 is connected to the signal read circuit 544. This data conversion unit 545 generates X-ray image data based on a digital signal supplied from the signal read circuit 544.

When no image data of high resolution is necessary, or it is desired to obtain the image data fast, according to a radiographing method selected by the operator, the consol control unit 13 transmits a received control signal regarding thinning, pixel averaging or area extraction to the cassette control unit 53. According to the received control signal regarding the thinning, the pixel averaging or the area extraction, the cassette control unit 53 controls thinning, pixel averaging, and area extraction described below to be executed.
The thinning is carried out by reading only an odd or even number sequence to thin the number of pixels to be read to 1/4 of the total number of pixels or 1/9 or 1/16 similarly. However, a thinning method is not limited to this method.
A pixel average can be calculated by simultaneously driving a plurality of scanning lines 5422 and executing analog addition of two pixels of the same column direction. The pixel average can be easily obtained not only by addition of two pixels but also analog addition of a plurality of pixels in a column signal wiring direction. Additionally, for addition of a row direction, by digital addition of adjacent pixels after A/D conversion and outputting, and combining the digital addition with the analog addition, an added value of square pixels of 2 × 2 or the like can be obtained. Accordingly, data can be read fast without wasting any applied X-rays.
For the area extraction, means for limiting a fetching area of image data is available. According to this means, an obtaining area of necessary image data is specified from instruction contents of a radiographing method, the cassette control unit 53 changes a data fetching range of the scanning drive circuit 543 based on the specified obtaining area, and the panel 54 drives this changed fetching range.

A memory 546 is connected to the data conversion unit 545. This memory 546 stores X-ray image data generated by the data conversion unit 545. In the memory 546, gain correction data is stored beforehand.
The memory 546 includes a random access memory (RAM) and a nonvolatile memory. The memory 546 can sequentially write X-ray image data sequentially generated by the data conversion unit 545, and then write the data en bloc in the nonvolatile memory. The nonvolatile memory includes two or more memory components such as an EEPROM or a flash memory, and can write data in one of the memory components while deleting data from the other.
Thus, in order to temporarily store the X-ray image data, the cassette 5 includes the memory 546 for temporarily storing the X-ray image data. Accordingly, the obtained X-ray image data can be temporarily stored in the memory 546 and, even in a communication failed or inhibited state, X-ray radiographing does not have to be delayed until the communication state becomes better, and the X-ray image data stored in the memory 546 can be transmitted from the cassette 5 to the console 1 at a communication speed compliant with the communication state between the cassette 5 and the console 1. From the standpoint of the radiographing efficiency, a capacity of the memory 546 is preferably 4 or more (especially 10 or more) in the number of images of a maximum data size image to be stored. From the standpoint of lower costs, a capacity of the memory 546 is preferably 1000 or less (especially 100 or less) in the number of images of a maximum data size image to be stored.

A flat plate support 547 made of a glass substrate is disposed below the photodetector 542. A laminated structure of the scintillator 541 and the photodetector 542 is supported by the support 547.

An X-ray dose sensor 548 is disposed in a lower surface (surface of a side opposed to an X-ray application direction of the support 547) of the support 547. The X-ray dose sensor 548 detects an X-ray dose transmitted through the photodetector 542, and transmits a predetermined X-ray dose signal to the cassette control unit 53 when the X-ray dose reaches a predetermined doze. According to the embodiment, an amorphous silicon light receiving element is used for the X-ray doze sensor 548. However, the X-ray dose sensor is not limited to this. An X-ray sensor for directly detecting X-rays by using a crystal silicon light receiving element or the like, or a sensor for detecting a phosphor by a scintillator may be used.
As described above, the cassette 5 is a portable cableless type driven by power from the internal power source 51, and the cassette communication unit 52 and the console communication unit 14 communicate with each other by radio. Thus, radiographing efficiency can be improved with high operability while maintaining association with the console 1.
The embodiment has been described by taking the one-panel configuration example where the panel 54 has 4096 × 3072 pixels. However, the present invention is not-limited to this. For example, a configuration of four small panels each of which has 2048 × 1536 pixels can be employed for the panel 54. When the panel 54 includes a plurality of such small panels, the yield of each panel 54 is improved while time and troublesome task of combining the four small panels to form one panel 54 are necessary. Thus, this configuration has an advantage of improving the overall yield to achieve low costs.
The embodiment has been described by taking the example where the scintillator 541 and the photodetector 542 are used to read the applied X-ray electric energy. The present invention is not limited to this. A photodetector capable of directly converting X-rays into electric energy can be applied. For example, an X-ray detector that includes an X-ray electric energy conversion unit using amorphous Se or PbI2, and an amorphous silicon TFT may be used.
The embodiment has been described by taking the example where one A/D converter 5442 is disposed in the signal read circuit 544. The present invention is not limited to this example. A plurality of A/D converters can be applied.
The number of A/D converters is preferably 4 or more, especially 8 or more to obtain a desired S/N ratio by shortening image reading time.
The number of A/D converters is preferably 64 or less, especially 32 or less to achieve lower costs/miniaturization. Accordingly, an analog signal band and an A/D conversion rate are not increased more than necessary.
The embodiment has been described by taking the example of the support 547 made of glass. The present invention is not limited to this example. A support made of a resin or a metal can be applied.

Next, an operation of the X-ray imaging system according to the first embodiment of the present invention will be described.

Until reception of a radiographing preparation instruction signal from the console control unit 13, the cassette control unit 53 controls the scanning drive circuit 543 to maintain an OFF state. To maintain the OFF state, potentials of the scanning line 5422, the signal line 5423, and the reset line 5426 are set equal, and the scanning drive circuit 543 is controlled by the cassette control unit 53 to prevent application of a bias to the collection electrode 5421. The power source of the signal read circuit 544 may be maintained OFF to set potentials of the scanning line 5422, the signal line 5423, and the reset line 5426 to GND potentials.

States where no bias is applied to the scanning drive circuit 543 or the signal read circuit 544 includes a radiographing standby mode and a sleep mode.
In the radiographing standby mode, not only no bias potential is applied to a photodiode but also, since the scanning drive circuit 543 and the signal read circuit 544 start fast, power is preferably supplied to neither of the scanning drive circuit 543 and the signal read circuit 544 to reduce power consumption more. In the radiographing mode, because no signal is generated, no power is preferably supplied to the data conversion unit 545 to reduce power consumption more.
A sleep mode in which power consumption is lower than that of the radiographing standby mode is preferably set. After a radiographed image is completely transmitted to the console 1, the process preferably changes to the sleep mode. In the sleep mode, while only a function of starting the radiographing standby mode is left based on an instruction from the console 1, power supplying for a high-speed transmission function or the entire transmission function of the cassette communication unit 52, or power supplying to the memory is preferably stopped. In other words, in the sleep mode, preferably, no bias potential is applied to the photodiode, and power for the high-speed transmission function or the entire transmission function of the scanning drive circuit 543, the signal read circuit 544, the data conversion unit 545, the memory 546 or the cassette communication unit 52 is not supplied. Accordingly, useless power consumption can be suppressed more.
Thus, in the state under the control of the radiographing standby mode and the sleep mode where power consumption per unit time is lower than that of a radiographable state, the potentials of the scanning line 5422, the signal line 5423, and the resent line 5426 are set to be equal, and no bias is applied to the collection electrode 5421, in other words, substantially no voltage is applied to the plurality of pixels. As a result, no voltage is substantially applied to the PD or the TFT to suppress deterioration, i.e., deterioration of the plurality of pixels. Moreover, useless power consumption can be suppressed.
The radiographable state is a state where radiographic image data can be immediately obtained by a radiographing operation. The radiographing operation is an operation necessary for obtaining radiographic image data by radiography. For example, in the case of the panel of the embodiment, panel initialization, the storage of electric energy generated by radiation irradiation, the reading of an electric signal, and the conversion of image data are radiographing operations.

For example, when the 1st switch of the X-ray irradiation switches is turned ON, and the input unit 12 to which a predetermined item such as subject information or radiographing information is input receives radiographing instruction contents via the operation input unit 2, or order information from the HIS/RIS 71, the console control unit 13 decides radiographing conditions based on the instruction contents from the operator or the order information from the HIS/RIS 71, and transmits a radiographing preparation instruction signal based on the radiographing conditions to the X-ray source control unit 43 and the cassette control unit 53 via the console communication unit 14 to change to a radiographable state.

A radiographing preparation instruction is, for example, an instruction which the operator inputs via the operation input unit 2 like the 1st switch of the X-ray irradiation switches. The input of a predetermined item such as subject information or radiographing information may be a radiographing preparation instruction.

Upon reception of the radiographing preparation instruction signal, the X-ray source control unit 43 drives and controls the high voltage generation source 41 to change to a state of applying a high voltage to the X-ray tube 42.

Upon reception of the radiographing preparation instruction signal, the cassette control unit 53 changes to a radiographable state. In other words, the resetting of all the pixels is repeated at predetermined intervals until a radiographing instruction is input in the radiographable state to prevent storage of electric energy in the capacitor 5424 by a dark current. Because continuance time of the radiographable state is unclear, the predetermined intervals are set to be longer than radiographing time, while ON-time of the transistor 5425 is set to be shorter than the radiographing time. Accordingly, in the radiographable state, the number of reading operations which impose loads on the transistor 5425 is reduced. After the change to the radiographable state, the cassette control unit 53 transmits a radiographable state transition signal to the console 1. Upon reception of the radiographable state transition signal, the console control unit 13 controls the display control unit 11 so that the display unit 3 displays a cassette radiographable state indicating the change to the radiographable state of the cassette.

Upon entry of the radiographing instruction to the console control unit 13, the console control unit 13 decides radiographing conditions based on instruction contents from the operator or order information from the HIS/RIS 71, and transmits radiographing condition information regarding the radiographing conditions to the X-ray source control unit 43 and the cassette control unit 53 via the console communication unit 14.

Upon reception of an X-ray irradiation instruction from an operation such as turning-ON of a 2nd switch of the X-ray irradiation switches, the console control unit 13 transmits a radiographing instruction signal to the cassette control unit 53 of the cassette 5.
After the entry of the X-ray irradiation instruction to the console control unit 13, the console control-unit 13 controls the X-ray source 4 and the cassette 5 to execute radiographing in synchronization.
Upon reception of the radiographing instruction signal, the cassette control unit 53 initializes the panel 54 so as to change to a state where the panel 54 can store electric energy. Specifically, the.cassette control unit 53 executes refreshing, and executes the resetting of all dedicated pixels for an image pickup sequence by predetermined times and the resetting of all pixels special for electric energy storage to change to an electric energy storage state. Because the predetermined time from an exposure request to radiographing preparation completion is required to be short for practical use, the resetting of all the pixels special for the image pickup sequence is carried out. Additionally, when an exposure request is generated from any the driving of the radiographable state, the driving of the imaging sequence is immediately started to shorten a period from the exposure request to the radiographing preparation completion. Therefore, the operability thereof is improved.
Upon the change to the state in which the cassette can store electric energy, the cassette control unit 53 transmits a preparation end signal of the cassette 5 to the console communication unit 14. Upon reception of the preparation end signal, the console communication unit 14 transmits the preparation end signal of the cassette to the console control unit 13.
In the state where the preparation end signal of the cassette is received, and the state where the X-ray irradiation instruction is received, the console control unit 13 transmits an X-ray irradiation signal to the X-ray source 4. Upon reception of the X-ray irradiation signal, the X-ray source control unit 43 drives and controls the high voltage generation source 41 to apply a high voltage to the X-ray tube 42, and the X-ray source 4 generates X-rays. The X-rays generated from the X-ray source 4 are adjusted for an X-ray irradiation range by an X-ray diaphragmming device disposed in the X-ray application port to irradiate the subject.
The console control unit 13 controls the display control unit 11 so that the display unit 13 displays ongoing X-ray radiographing indicating that X-ray radiographing is being executed.

The X-rays transmitted through the subject are incident on the cassette 5. The X-rays which are incident on the cassette 5 are converted into visible lights by the scintillator 541.

An X-ray dose with which the cassette 5 is irradiated is detected by the X-ray dose sensor 548. When the X-ray dose reaches a predetermined amount, the X-ray dose sensor 548 transmits a predetermined X-ray dose signal to the cassette control unit 53. Upon reception of the predetermined X-ray dose signal, the cassette control unit 53 transmits an X-ray end signal to the console communication unit 14 via the radio repeater 6. Upon reception of the X-ray end signal, the console communication unit 14 transmits the X-ray end signal to the console control unit 13, and an X-ray irradiation stop signal to the X-ray source control unit 43. Upon reception of the X-ray irradiation stop signal, the X-ray source control unit 43 drives and controls the high voltage generation source 41, and the high voltage source 41 stops application of the high voltage to the X-ray tube 42. Accordingly, the generation of X-rays is stopped.

Upon transmission of the X-ray end signal, the cassette control unit 53 drives and controls the scanning drive circuit 543 and the signal read circuit 544 based on the X-ray end signal. The scanning drive circuit 543 reads electric energy obtained by the photodetector 542, and inputs the obtained electric energy to the signal read circuit 544. For example, after the predetermined time elapses from the start or the end of transmission of the X-ray end signal, the electric energy obtained by the photodetector 542 may be read. Alternatively, the electric energy obtained by the photodetector 542 may be read simultaneously with the end of transmission of the X-ray end signal. The signal read circuit 544 converts the input electric energy into a digital signal. Then, the data conversion unit 545 converts the digital signal into image data. The memory 546 temporarily stores the image data converted by the data conversion unit 545.

Subsequently, after the image data is obtained, the cassette control unit 53 obtains correction image data. The correction image data is dark image data for which X-ray irradiation is not executed, and used for correcting an X-ray image to obtain high-quality X-ray image. A method of obtaining the correction image data is similar to the method of obtaining the image data except that X-ray irradiation is not executed. Electric energy storage time is set to be equal between the case in which the image data is obtained and the case in which the correction image data is obtained. The electric energy storage time means time from the completion of the reset operation, i.e., turning-OFF of the transistor 5425 at the resetting to turning-ON of the transistor 5425 to read electric energy next time. Accordingly, the timing of starting electric energy storage or electric energy storage time varies according to each scanning line 5422.

The data conversion unit 545 carries out the offset correction for the generated image data based on the obtained correction image data, and then carries out the gain correction based on gain correction data which is previously obtained and stored in the memory 546. In the case of a panel including insensitive pixels or a plurality of small panels, an image is continuously interpolated not to generate any uncomfortable feelings in joints of the small panels, and the correction process originated from the panel is completed. According to the embodiment, the data conversion unit 545 is separate from the cassette control unit 53. However, the cassette control unit 53 may serve also as the data conversion unit 545.
When the correction process is executed for the X-ray image data to be temporarily stored in the memory 546, the cassette control unit 53 transmits the X-ray image data via the cassette communication unit 52, the radio repeater 6, and the console communication unit 14.
Thus, because the cassette 5 includes the memory 546 which receives power from the internal power source 51 to function, and temporarily stores the X-ray image data obtained by the panel 54 and transmitted through the cassette communication unit 52, the memory functions as the communication between the cassette and the console and an accumulator for data generation from the panel 54, and the X-ray image data can be transferred from the cassette to the console according to the communication state between the cassette and the console. Especially, because the memory is a RAM, data can be stored well even when the speed of data generation from the panel 54 is high.

Upon reception of the X-ray image data, the console control unit 13 temporarily stores the data in the image storage unit 16. Then, the console control unit 13 controls the image processing unit 15 to generate thumbnail image data from the X-ray image data temporarily stored in the image storage section 16. The display control unit 11 controls the display unit 3 to display a thumbnail image based on the generated thumbnail image data.
Subsequently, the image processing unit 15 carries out the image processing for the image data based on instruction contents from the operator or order information from the HIS/RIS 71 or the like. The image data for which the image processing is carried out is displayed in the display unit 3 and is transmitted to the image storage unit 16 to be stored as image data at the same time of displaying the image data. Additionally, based on an instruction from the operator, the image processing unit 15 processes the image data again, and a processing result of the image data is displayed in the display unit 3.
The network communication unit 18 transfers the image data to the imager 72, the image processing terminal 73, the viewer 74, and the file server 75 which are external devices in the network. Upon transfer of the image data from the console 1, the external devices operate according to the function of each device. In other words, the imager 72 records the X-ray image data in an image recording medium such as a film. The image processing terminal 73 executes image processing for the X-ray image data or processing for computer aided diagnosis (CAD) to store the X-ray image data in the file server 75. The viewer 74 displays an X-ray image based on the X-ray image data. The file server 75 stores the X-ray image data.
Thus, because the console control unit 13 can control each unit by using the power supply state information indicating the state of supplying power to the cassette 5, good radiographing can be controlled, and the radiographing efficiency can be improved. Moreover, because the data can be displayed in the display unit 3 according to the power supply state information, the operator determines whether the cassette 5 can immediately execute X-ray radiographing for example, determines that the radiographing is executed by using another cassette or modality in first or latterly. Therefore, the radiographing efficiency can be improved.

Next, the operation which is carried out when the console power source is stopped according to the first embodiment of the present invention will be described.

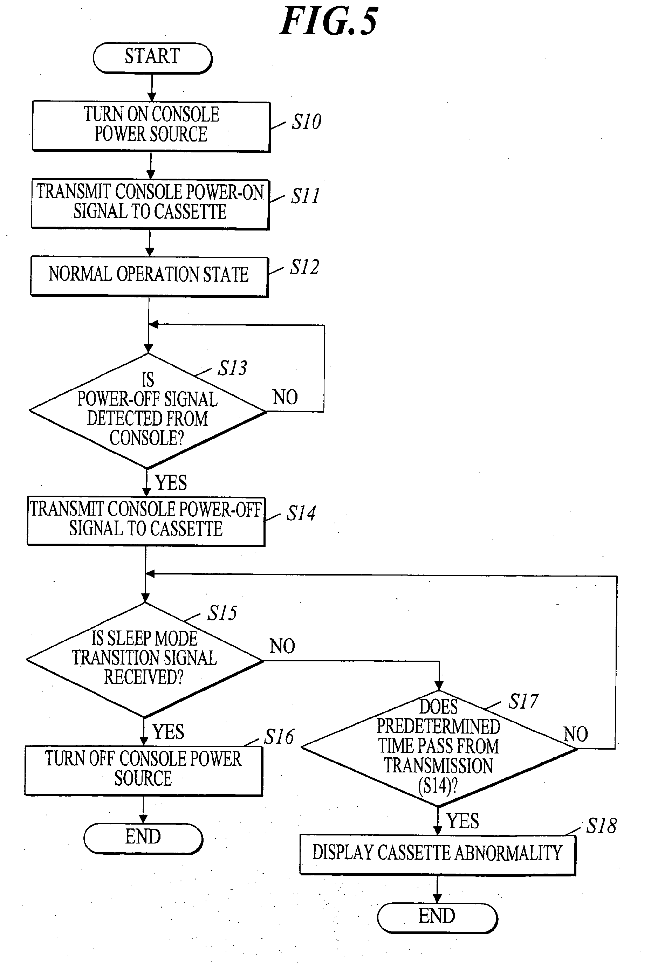

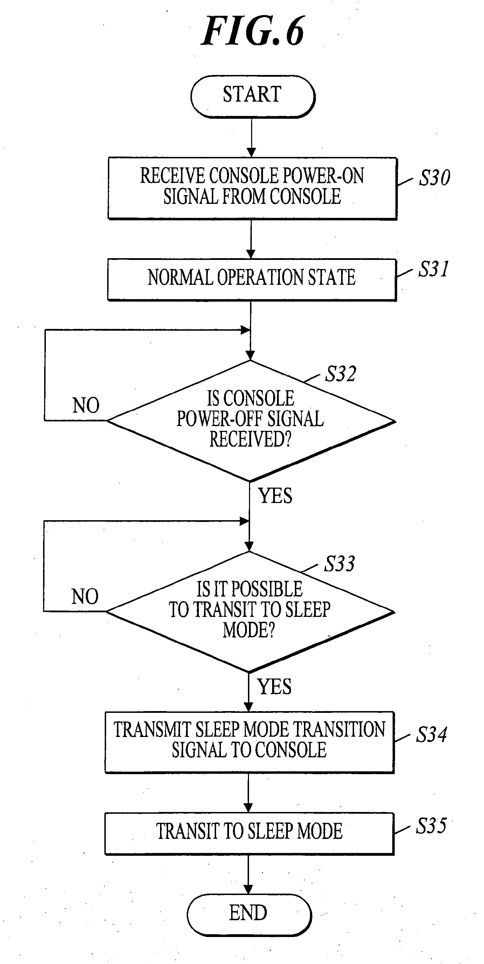

FIG. 5 is a flowchart of the consol control unit 13. FIG. 6 is a flowchart of the cassette control unit 53. Transmission, reception, and communication between the console control unit 13 and the cassette control unit 53 are all executed via the cassette communication unit 52, the radio repeater 6, and the console communication unit 14. Hereinafter, however, the transmission, the reception, and the communication between the console control unit 13 and the cassette control unit 53 will be explained, and-the explanation of the transmission, the reception and the communication which are executed via the cassette communication unit 52, the radio repeater 6, and the console communication unit 14, are omitted.

The operator turns ON the power source button to start the console power source unit 17 to start supplying of power to each section of the console 1 such as the console control unit 13, and the console communication unit 14 (step S10). Then, the console control unit 13 is started to control the console communication unit 14 to transmit a console power-ON signal to the cassette 5 (step S11). The process proceeds to the aforementioned normal operation state (step S12).
In the normal operation state, the console control unit 13 always detects whether a console power-OFF signal which is an instruction of turning OFF supplying of power from the console power source unit 17 is input by user's operation of turning OFF the power source button or user's operation of turning OFF power via the input unit 12 (step S13). The console power-OFF signal is a type of console power-OFF information. When no console power-OFF signal is detected (step S13: NO), the console control unit 13 continues the detection of a console power-OFF signal. When a console power-OFF signal is detected (step S13: YES), the console control unit 13 transmits the console power-OFF signal to the cassette control unit 53 (step S14).
Then, the console control unit 13 detects whether a sleep mode transition signal is received from the cassette control unit 53 (step S15). When the console control unit 13 detects that the sleep mode transition signal is received from the cassette control unit 53 (step S15: YES), the console control unit 13 controls the console power source unit 17 to turn OFF supplying of power (step S16). When no sleep mode transition signal is received from the cassette control unit 53 (step S15: NO), the console control unit 13 determines whether predetermined time elapses from the transmission of the console power-OFF signal in the step S14 (step S17). When the predetermined time does not elapse from the transmission of the console power-OFF signal (step S17: NO), the process returns to the step S15, and continues the detection as to whether a sleep mode transition signal is received from the cassette control unit 53. When the predetermined time elapses from the transmission of the console power-OFF signal (step S17: YES), the console control unit 13 controls the display unit 3 to display cassette abnormalities indicating the abnormalities of the cassette (step S18). For example, the communication relation is always maintained between the radio repeater 6 and the cassette communication unit 52 or between the console communication unit 14 and the cassette communication unit 52 to always maintain the communication relation between the console and the cassette. In this case, the displaying indicating cassette abnormalities is preferably changed between a case where the communication relation with the cassette is maintained and a sleep mode transition signal is not received and a case where a communication relation with the cassette is not maintained.

On the other hand, upon reception of the console power-ON signal from the console control unit 13 (step S30), the cassette control unit 53 proceeds to the aforementioned normal operation state (step S31).
In the normal operation state, the cassette control unit 53 always detects whether a console power-OFF signal is received from the console control unit 13 (step S32). When no console power-OFF signal is received (step S32: NO), the cassette control unit 53 continues the detection as to whether a console power-OFF signal is received. When a console power-OFF signal is received (step S32: YES), the cassette control unit 53 determines whether the cassette 5 can change to a sleep mode (step S33). When the cassette cannot change to the sleep mode (step S33: NO), the cassette control unit 53 continues the determination as to whether the cassette can change to the sleep mode. When the cassette 5 can change to the sleep mode (step S33: YES), the cassette control unit 53 transmits a sleep mode transition signal to the console control unit 13 (step S34), and controls the cassette 5 to change to the sleep mode (step S35).

As described above, according to the X-ray imaging system 1000 of the first embodiment, the console control unit 13 controls the console communication unit 14 to transmit the console power-OFF signal as the console power-OFF information to the cassette 5 before the console power source unit 17 stops supplying of power, and when the cassette communication unit 52 receives the console power-OFF signal, the cassette control unit 53 executes the control to set sleep mode control where power consumption of per unit time of power supplied from the internal power source 51 is lower than that of the radiographable state, and the power supply state of the cassette 5 can be changed to the sleep mode. Thus, useless power consumption of the internal power source 51 of the cassette 5 can be suppressed. As a result, when a power source of the console 1 is started to quickly execute X-ray radiographing, such as in emergency, a situation where no necessary power is left for radiographing can be prevented, and a charging frequency of the internal power source 51 of the cassette 5 can be reduced. Therefore, the overall radiographing efficiency can be improved.
When the state of the sleep mode control where the power consumption per unit time of the power supplied from the internal power source 51 is lower than that of the radiographable state is set, the cassette communication unit 52 transmits the sleep mode transition signal as-power saving state transition information to the console 1, and the console power source unit 17 stops supplying of power after the console communication unit 14 receives the sleep mode transition signal. Thus, a situation where the console power source unit 17 stops supplying of power in the state of uselessly consuming the power from the internal power source 51 of the cassette 5 can be prevented.

The embodiment has been described by taking the example where the cassette 5 and the console 1 correspond to each other one to one. The present invention is not limited to this example. Cassettes and consoles can correspond to each other 1 to M, N to 1, or N to M (N and M are natural numbers of 2 or more). In such a case, preferably, a network is set between the cassettes and the consoles, the correspondence between the cassettes and the consoles is stored in a correspondence information holding section, the correspondence information holding section is disposed in the network or the console, and the console controls the cassette.

Needless to say, the embodiment can be achieved by supplying a storage medium for recording software programs for realizing the aforementioned functions of the embodiment to the system or the device in any of the console 1 and the cassette 5, and by reading and executing the programs stored in the storage medium by a computer (or CPU or MPU) of the system or the device. As the storage medium for storing the programs, a nonvolatile memory, a power backed-up volatile memory, a ROM memory, an optical disk, a magnetic disk such as a hard disk, or a magneto-optical disk may be used.
Needless to say, not only a case where the aforementioned functions of the embodiment is realized by executing the read programs using the computer, but also a case where a basic system or an operating system (OS) operated in the computer executes a part or all parts of the actual process based on instructions of the programs to realize the aforementioned functions of the embodiment, are included.
Needless to say, a case where after the programs read from the storage medium are written in a memory disposed in a function expansion board inserted into the computer or a function expansion unit connected to the computer, based on the instructions of the program codes, a CPU or the like disposed in the function expansion board or the function expansion unit executes a part or all parts of the actual process to realize the aforementioned functions of the embodiment is also included.
Moreover, such programs may be provided from the outside via a network or a line. When the programs supplied from the outside are used, the programs may be stored in a storage medium such as a nonvolatile memory, a power backed-up volatile memory, a magnetic disk such as an optical disk or a hard disk, or a magneto-optical disk.

### [Second Embodiment]

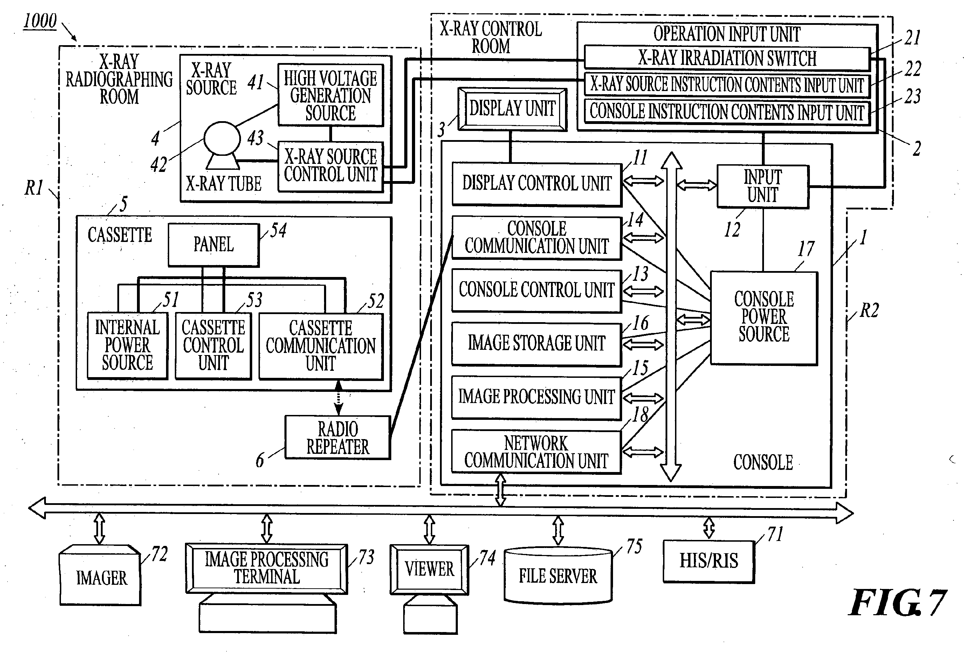

Next, referring to FIG. 7, a second embodiment of an X-ray imaging system will be described.
The second embodiment is different from the first embodiment in the configuration of an operation input unit (refer to FIG. 7). The operation input unit comprises an X-ray irradiation switch, an X-ray source instruction contents input unit, and a console instruction contents input unit. The X-ray irradiation switch and the X-ray source instruction contents input unit are connected to an X-ray source control unit, and the console instruction contents input unit is connected to an input unit of a console. A console communication unit is different from the first embodiment and is connected to a radio repeater but not connected to the X-ray source control unit. The other configurations are similar to those of the first embodiment.
The second embodiment will be described focusing on the operation input unit and the X-ray source control unit. The units which are the same as those of the first embodiment are denoted by the same reference numerals, and the detailed description thereof will be omitted.

FIG. 7 shows a schematic configuration of an X-ray imaging system 1000 according to the second embodiment. As shown in FIG. 7, an operation input unit 2 comprises an X-ray irradiation switch 21 for inputting a radiographing preparation instruction or a radiographing instruction by an operator, an X-ray source instruction contents input unit 22 for inputting instruction contents to the X-ray source control unit by the operator, and a console instruction contents input unit 23 for inputting the instruction contents to the console by the operator. The instruction contents include X-ray radiographing conditions such as an X-ray tube voltage, an X-ray tube current or X-ray irradiation time, X-ray radiographing control conditions such as radiographing timing, a radiographing region, or a radiographing method, image processing conditions, image output conditions, cassette selection information, order selection information, and a subject ID.

The X-ray source control unit 43 and the input unit 12 are connected to the X-ray irradiation switch 21. The X-ray irradiation switch 21 includes a first switch for inputting a radiographing preparation instruction, and a second switch for inputting a radiographing instruction. An instruction of the X-ray irradiation switch 21 is input to the X-ray source control unit 43 and the input unit 12. After the entry from the first switch, the inputting can be executed from the second switch.
The X-ray source control unit 43 is connected to the X-ray source instruction contents input unit 22. The X-ray source control unit 43 drives and controls a high voltage generation source 41 and an X-ray tube 42 based on instruction contents input from the X-ray source instruction contents input unit 22.
The input unit 12 is connected to the console instruction contents input unit 23. The instruction contents input from the input unit 12 are transmitted to the console control unit 13. The console control unit 13 drives and controls the console 1 and the cassette 5 based on the received instruction contents.

Next, the operation of the X-ray imaging system according to the second embodiment of the present invention will be described.

The operator presses the first switch of the X-ray irradiation switch 21 to input a radiographing preparation instruction. The X-ray source control unit 43 drives and controls the high voltage generation source 41 based on the radiographing preparation instruction of the first switch to change to a state of applying a high voltage to the X-ray tube 42. Based on the radiographing preparation instruction of the first switch input from the input unit 12, the console control unit 13 transmits the radiographing preparation instruction to the cassette 5 via the console communication unit 14 and the radio repeater 6. Based on the received radiographing preparation instruction, the cassette control unit 53 repeats the resetting at predetermined intervals until a radiographing instruction is input to prevent storage of electric energy in a capacitor 5424 by a dark current.

The operator presses the second switch of the X-ray irradiation switch 21 to input the radiographing instruction. Based on the radiographing instruction of the second switch, the X-ray source control unit 43 drives and controls the high voltage generation source 41 to apply a high voltage to the X-ray tube 42. As a result, the radioactive rays are generated.
Based on the radiographing preparation instruction of the first switch input from the input unit 12, the console control unit 13 drives and controls the cassette 5 to execute the radiographing by the radioactive rays generated from the X-ray source 4.

The X-rays generated from the X-ray source 4 are passed through a subject to enter the cassette 5. Based on the X-rays which are incident on the cassette 5, image data is obtained to be transmitted to the console 1 via the radio repeater 6 and the console communication unit 14.

As described above, according to the X-ray imaging system 1000 of the second embodiment, even if the configuration of the operation input unit is different, a power supply state of the cassette 5 can be changed to a sleep mode before a console power source unit 17 stops supplying of power. Thus, while the console 1 stops the console power source unit 17 and does not transmit a control signal to the cassette 5, useless power consumption by an internal power source 51 of the cassette 5 can be suppressed.

### [Third Embodiment]

Next, a third embodiment which is a modified example of the first and second embodiments of an X-ray imaging system will be described.
The third embodiment is different in the operation which is executed when a console power source is turned OFF. Thus, a device configuration or the like of the third embodiment is the same as those of the first and second embodiments. Hereinafter, the explanation will focus on the operation which is executed when the console power source is turned OFF.
The transmission and the reception between a console control unit 13 and the cassette control unit 53 are actually carried out via the cassette communication unit 52, the radio repeater 6, and the console communication unit 14. Hereinafter, however, the transmission, the reception, and the communication between the console control unit 13 and the cassette control unit 53 will be explained, and the explanation of the transmission, the reception and the communication which are executed via the cassette communication unit 52, the radio repeater 6, and the console communication unit 14, are omitted.

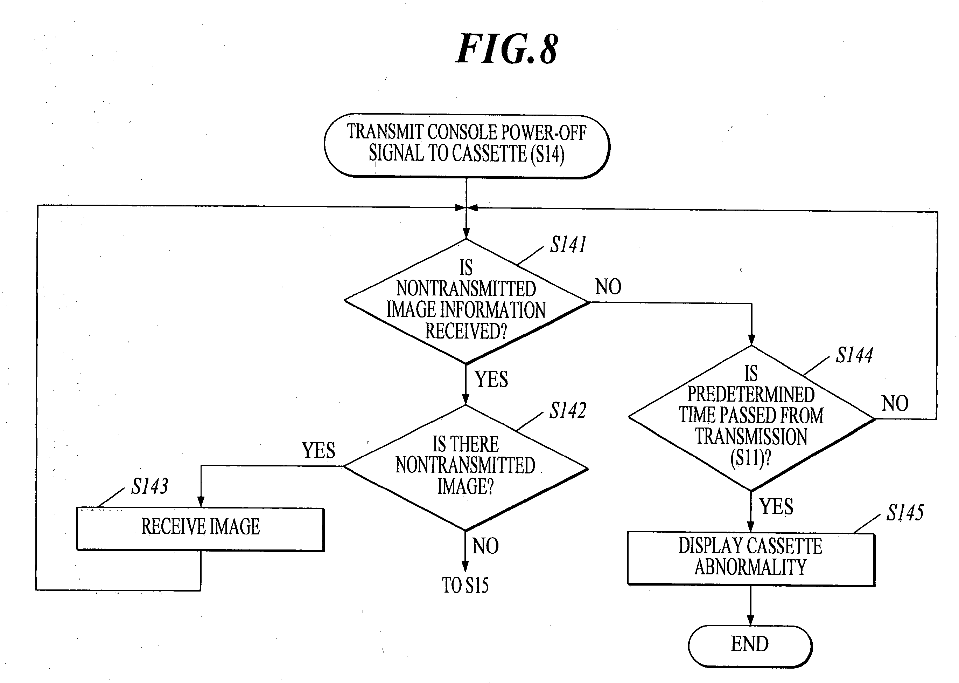

When the step S14 of FIG. 5 for stopping the console power source of the first and second embodiments is executed, a subflow shown in FIG. 8 is started. FIG. 8 is a flowchart of a subflow of the console control unit 13 in case that the console power source is stopped.
As shown in FIG. 8, upon start of the subflow (step S14), the console control unit 13 detects whether the non-transmitted image information regarding the presence and the number of non-transmitted X-ray image data is received from the cassette control unit 53 (step S141).
When the console control unit 13 is received the non-transmitted image information from the cassette control unit 53 (step S141: YES), based on the number of pieces of image information that the non-transmitted image information regarding the presence and the number of non-transmitted X-ray image data is received, the console control unit 13 determines the presence of non-transmitted X-ray image data in a memory 546 of a cassette 5 (step S142). When the consol control unit 13 determines that the non-transmitted X-ray image data exists in the memory 546 of the cassette 5 (step S142: YES), the process changes to an image reception state of receiving the non-transmitted X-ray image data. Then, upon reception of the X-ray image data in the image reception state (step S143), the console control unit 13 stores the received X-ray image data in the image storage unit 16 to return to the aforementioned determination (step S141). When the console control unit 13 determines that the non-transmitted X-ray image data does not exist in the memory 546 of the cassette 5 (step S142: NO), the console control unit 13 finishes the subflow to return to a main flow (step S15).
On the other hand, when the console control unit 13 does not detect that the non-transmitted image information is received from the cassette control unit 53 (step S141: NO), the console control unit 13 determines whether predetermined time elapses from the transmission of the console power-OFF signal in the step S11 (step S144). When the console control unit 13 determines that the predetermined time does not elapse from the transmission of the console power-OFF signal (step S144: NO), the console control unit 13 returns to the detection as to whether the non-transmitted image information is received (step S141). When the console unit 13 determines that the predetermined time elapses from the transmission of the console power-OFF signal (step S144: YES), the console control unit 13 controls the display control unit 11 to display cassette abnormalities in the display section 3 (step S145), finishes the subflow, and stops the main flow shown in FIG. 5.

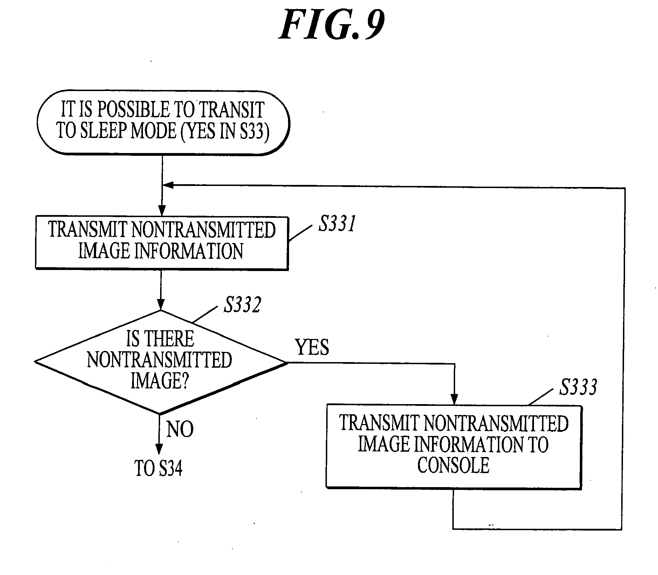

A subflow shown in FIG. 9 is started when the step S33 of FIG. 6 for stopping the console power source of the first and second embodiments is executed. FIG. 9 is a flowchart of the cassette control unit 53 when the console power source is stopped.
Upon start of the subflow (step S33), the cassette control unit 53 detects whether the non-transmitted X-ray image data exists in the memory 546, and transmits the non-transmitted image information regarding the presence and the number of nontransmitted X-ray image data to the console 1 (step S331). Then, the cassette control unit 53 detects whether the non-transmitted X-ray image data exists (step S332). When the cassette control unit 53 detects that the non-transmitted X-ray image data exists (step S332: YES), the cassette control unit 53 transmits the non-transmitted X-ray image data to the console 1 (step S333) to return to the step S331. When the cassette control unit 53 detects that the non-transmitted X-ray image data does not exist (step S332: NO), the cassette control unit 53 finishes the subflow to return to the main flow (step S34).

As described above, according to the X-ray imaging system 1000 of the third embodiment, before the console power source unit 17 stops supplying of power, whether image data which is not transmitted to the console 1 exists in the cassette 5 can be determined. Thus, it can be prevented that an image which is not transmitted to the console 1 is lost while the console power source 17 is stopped, and the radiographing efficiency can be improved.

According to the third embodiment, the non-transmitted image information is transmitted from the cassette 5 to the console 1 only at first, and based on the number of pieces of image information that the non-transmitted image information is received, the console control unit 13 determines the presence of non-transmitted X-ray image data in the memory 546 of the cassette 5. The present invention is not limited to this. After the transmission of the image information, the non-transmitted image information is transmitted from the cassette 5 to the console 1 every time, and based on the presence of non-transmitted images of the non-transmitted image information, the console control unit 13 may determine the presence of non-transmitted X-ray image data in the memory 546 of the cassette 5.

### [Items Common among the Embodiments]

As described above, a radiographic imaging system comprises: a cassette comprising cassette communication means for communicating with a console, radiographic image obtaining means for obtaining radiographic image data by radiographing, and an internal power source for supplying power to the cassette communication means and the radiographic image obtaining means; and the console comprising console communication means for communicating with the cassette communication means, and console power supply means for supplying power to the console communication means, wherein: the console control means causes the console communication means to transmit console power-OFF information to the cassette before the console power supply means stops supplying of power, and when the cassette communication means receives the console power-OFF information, power consumption per unit time of power supplied from the internal power source is controlled so as to be lower than that of a radiographable state. Thus, useless power consumption of the internal power source of the cassette can be suppressed, and a situation where no necessary power is left for radiographing is prevented. Therefore, the overall radiographing efficiency can be improved.

Further, when the power consumption per unit time of power supplied from the internal power source is lower than that of the radiographable state, the cassette communication means transmits power saving state transition information to the console, and after the console communication means receives the power saving state transition information, the console power supply means stops supplying of power. Thus, a situation where the console power supply means stops supplying of power in the state of uselessly consuming the power of the internal power source of the cassette can be suppressed.

Further, the cassette further comprises cassette control means for controlling the radiographic image obtaining means, the cassette communication means, and the internal power source, the console further comprises console control means for controlling the console communication means and the console power supply means, the console control means controls the console communication means to transmit the console power-OFF information to the cassette before the console power supply means stops supplying of power, and when the cassette communication means receives the console power-OFF information, the cassette control means controls the power consumption per unit time of power supplied from the internal power source so as to be lower than that of the radiographable state. Thus, useless power consumption of the internal power source of the cassette can be suppressed, and a situation where no necessary power is left for radiographing is prevented. Therefore, the overall radiographing efficiency can be improved.

Further, when the cassette control means controls the power consumption per unit time of power supplied from the internal power source so as to be lower than that of the radiographable state, the cassette control means causes the cassette communication means to transmit power saving state transition information to the console, and after the console communication means receives the power saving state transition information, the console control means controls the console power supply means to stop supplying of power. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, a radiographic imaging system comprises: a cassette comprising cassette communication means for communicating with a console, radiographic image obtaining means for obtaining radiographic image data by radiographing, and an internal power source for supplying power to the cassette communication means and the radiographic image obtaining means; and the console comprising console communication means for communicating with the cassette, and console power supply means for supplying power to the console communication means, wherein: when power consumption per unit time of power supplied from the internal power source is lower than that of a radiographable state, the cassette communication means transmits power saving state transition information to the console, and after the console communication means receives the power saving state transition information, the console power supply means stops supplying of power. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, the cassette further comprises cassette control means for controlling the radiographic image obtaining means, the cassette communication means, and the internal power source, the console further comprises console control means for controlling the console communication means and the console power supply means, when the cassette control means controls the power consumption per unit time of power supplied from the internal power source so as to be lower than that of a radiographable state, the cassette control means causes the cassette communication means to transmit the power saving state transition information to the console, and after the console communication means receives the power saving state transition information, the console control means controls the console power supply means to stop supplying of power. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, the cassette control means causes the cassette communication means to transmit power supply state information indicating a state of power supplying to the radiographic image obtaining means to the console, and the console control means of the console controls the console power supply means according to the power supply state information received by the console communication means. Because the console control means can execute the control by using the power supply state information indicating the state of supplying power to the radiographic image obtaining means of the cassette, the radiographing efficiency can be improved.

Further, the console control means causes display means to execute displaying according to the power supply state information received by the console communication means. Thus, an operator determines whether the cassette can execute the radiographing and the radiographing efficiency can be improved.

Further, the cassette is a cableless portable type, and the cassette communication means and the console communication means communicate with each other via radio communication. Thus, while maintaining the association with the console, operability is high, and the radiographing efficiency can be improved.

Further, the console communication means is connected with a cable to a radio repeater which communicates with the cassette communication means by radio. Thus, for example, by arranging the radio repeater in the radiographing room, good radio communication can be carried out even when the cassette is used in the radiographing room separated from the console by a radiation shielding member.

Further, the radiographic image obtaining means comprises voltage application means for applying a voltage to a plurality of pixels, and the plurality of pixels for generating charges according to a radiation dose in a state in which the voltage is applied by the voltage application means, and the voltage is substantially applied to the plurality of pixels in the radiographable state, and the voltage is not substantially applied to the plurality of pixels in the state in which the power consumption per unit time is lower than that of the radiographable state. Thus, the deterioration of the plurality of pixels can be suppressed.

Further, a state in which the power consumption per unit time is lower than that of the radiographable state is a state in which a function necessary for starting up according to an instruction from the console is left, and supplying of power from the console to the radiographic image obtaining means is stopped. Thus, useless power consumption can be suppressed more.

Further, the cassette further comprises a memory in which power supplied from the internal power source is received to temporarily store radiographic image data obtained by the radiographic image obtaining means and transmitted by the cassette communication means. Thus, the radiographic image data obtained by the radiographic image data is stored in the memory, and the radiographic image data stored in the memory can be transferred from the cassette to the console according to a communication state between the cassette and the console.

Further, a console comprises: console communication means comprising cassette communication means for communicating with the console, radiographic image obtaining means for obtaining radiographic image data by radiographing, and an internal power source for supplying power to the cassette communication means and the radiographic image obtaining means, the console communication means communicating with a cassette in which power consumption per unit time of power supplied from the internal power source is lower than that of a radiographable state when the cassette communication means receives console power-OFF information; and console power supply means for supplying power to the console communication means, wherein the console communication means transmits the console power-OFF information to the cassette before the console power supply means stops supplying of power. Thus, useless power consumption of the internal power source of the cassette can be suppressed, and a situation where no power necessary for radiographing is left can be suppressed. Therefore, the overall radiographing efficiency can be improved.

Further, in case of communicating with the cassette in which the cassette communication means transmits power saving state transition information to the console when the power consumption per unit time of power supplied from the internal power source is lower than that of the radiographable state, the console power supply means stops supplying of power after the console communication means receives the power saving state transition information. Thus, a situation where the console power supply means stops supplying of power in the state of uselessly consuming the power of the internal power source of the cassette can be suppressed.

Further, a console comprises: console communication means comprising cassette communication means for communicating with the console, radiographic image obtaining means for obtaining radiographic image data by radiographing, and an internal power source for supplying power to the cassette communication means and the radiographic image obtaining means, the console communication means communicating with a cassette in which the cassette communication means transmits power saving state transition information to the console when power consumption per unit time of power supplied from the internal power source is lower than that of a radiographable state; and console power supply means for supplying power to the console communication means, wherein the console power supply means stops supplying of power after the console communication means receives the power saving state transition information. Thus, a situation where the console power supply means stops supplying of power in the state of uselessly consuming the power of the internal power source of the cassette can be suppressed.

Further, the cassette causes the cassette communication means to transmit power supply state information indicating a state of power supplying to the radiographic image obtaining means to the console, and the console controls the console power supply means according to the power supply state information received by the console communication means. Thus, the radiographing efficiency can be improved.

Further, display means is caused to execute displaying according to the power supply state information received by the console communication means. Thus, the operator determines whether the cassette can execute the radiographing. Therefore, the radiographing efficiency can be improved.

Further, the cassette is a cableless portable type, and the cassette communication means and the console communication means communicate with each other via radio communication. Thus, while the association with the console is maintained, the operability thereof is high. Further, the radiographing efficiency can be improved.

Further, the console communication means is connected with a cable to a radio repeater which communicates with the cassette communication means by radio. Thus, for example, by arranging the radio repeater in a radiographing room, good radio communication can be carried out even when the cassette is used in the radiographing room separated from the console by a radiation shielding member.

Further, a computer readable program causes a computer comprising: console communication means for communicating with a cassette comprising cassette communication means for communicating with a console, radiographic image obtaining means for obtaining radiographic image data by radiographing, and an internal power source for supplying power to the cassette communication means and the radiographic image obtaining means, wherein power consumption per unit time of power supplied from the internal power source is lower than that of a radiographable state when the cassette communication means receives console power-OFF information; and console power supply means for supplying power to the console communication means, to execute: a console power-OFF step of controlling the console power supply means so as to stop supplying of power; and a power-OFF information transmission step of controlling the console communication means so as to transmit the console power-OFF information to the cassette before the console power-OFF step. Thus, useless power consumption of the internal power source of the cassette can be suppressed, and a situation where no necessary power is left for radiographing is prevented. Therefore, the overall radiographing efficiency can be improved.

Further, the program further causes the computer to execute: a power saving state transition information reception determination step of determining whether the console communication means receives the power saving state transition information, wherein the console power-OFF step is executed after it is determined that the power saving state transition information is received in the power saving state transition information reception determination step. Because the consol power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, a program causes a computer comprising: console communication means for communicating with a cassette comprising cassette communication means for communicating with a console, radiographic image obtaining means for obtaining radiographic image data by radiographing, and an internal power source for supplying power to the cassette communication means and the radiographic image obtaining means, wherein the cassette communication means transmits power saving state transition information to the console when power consumption per unit time of power supplied from the internal power source is lower than that of a radiographable state; and console power supply means for supplying power to the console communication means, to execute: a power saving state transition information reception determination step of determining whether the console communication means receives the power saving state transition information; and a console power-OFF step of controlling the console power supply means so as to stop supplying of power after it is determined that the power saving state transition information is received in the power saving state transition information reception determination step. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, a cassette comprises: cassette communication means for communicating with a console comprising console communication means for communicating with the cassette communication means and console power supply means for supplying power to the console communication means, wherein the console control means causes the console communication means to transmit console power-OFF information to the cassette before the console power supply means stops supplying of power; radiographic image obtaining means for obtaining radiographic image data by radiographing; and an internal power source for supplying power to the cassette communication means and the radiographic image obtaining means, wherein when the cassette communication means receives the console power-OFF information, the internal power source is controlled so that power consumption per unit time of power supplied from the internal power source is lower than that of a radiographable state. Thus, useless power consumption of the internal power source of the cassette can be suppressed, and a situation where no necessary power is left for radiographing is prevented. Therefore, the overall radiographing efficiency can be improved.

Further, in the console, the console power supply means stops supplying of power after the console communication means receives the power saving state transition information, and the cassette communication means transmits the power saving state transition information to the console when the power consumption per unit time of power supplied from the internal power source is lower than that of the radiographable state. Because the console power supply means stops supplying of power after the power consumption per unit time of the power supplied from the internal power source is lower than that of the radiographable state, a situation where the console power supply means stops supplying of power in the state of uselessly consuming the power of the internal power source of the cassette can be suppressed.

Further, a cassette comprises: cassette communication means for communicating with a console comprising console communication means for communicating with a cassette and console power supply means for supplying power to the console communication means, wherein the cassette communication means transmits power saving state transition information to the console when power consumption per unit time of power supplied from an internal power source is lower than that of a radiographable state; radiographic image obtaining means for obtaining radiographic image data by radiographing; and the internal power source for supplying power to the cassette communication means and the radiographic image obtaining means, wherein the console power supply means stops supplying of power after the console communication means receives the power saving state transition information. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, the console controls the console power supply means according to the power supply state information received by the console communication means, and the cassette communication means transmits power supply state information indicating a state of power supplying to the radiographic image obtaining means to the console. Because the console can execute the control by using the power supply state information indicating the state of supplying power to the radiographic image obtaining means of the cassette, the radiographing efficiency can be improved.

Further, the cassette is a cableless portable type, and the cassette communication means and the console communication means communicate with each other via radio communication. Thus, while the association with the console is maintained, the operability thereof is high, and the radiographing efficiency can be improved.

Further, the radiographic image obtaining means comprises voltage application means for applying a voltage to a plurality of pixels, and the plurality of pixels for generating charges according to a radiation dose in a state in which the voltage is applied by the voltage application means, and the voltage is substantially applied to the plurality of pixels in the radiographable state, and the voltage is not substantially applied to the plurality of pixels in the state in which the power consumption per unit time is lower than that of the radiographable state. Because no voltage is substantially applied to the plurality of pixels when the power consumption per unit time of the power supplied from the internal power source of the cassette is lower than that of the radiographable state, the deterioration of the plurality of pixels can be suppressed.

Further, a state in which the power consumption per unit time is lower than that of the radiographable state is a state in which a function necessary for starting up according to an instruction from the console is left, and supplying of power from the console to the radiographic image obtaining means is stopped. Thus, useless power consumption can be suppressed more.

The cassette further comprises a memory in which power supplied from the internal power source is received to temporarily store radiographic image data obtained by the radiographic image obtaining means and transmitted by the cassette communication means. Thus, the radiographic image data obtained by the radiographic image obtaining means is stored in the memory, and the radiographing image data stored in the memory can be transferred from the cassette to the console according to a communication state between the cassette and the console.

Further, a program causes a computer in a cassette comprising: cassette communication means for communicating with a console comprising console communication means for communicating with the cassette communication means and console power supply means for supplying power to the console communication means, wherein consol control means causes the console communication means to transmit console power-OFF information to the cassette before the console power supply means stops supplying of power; radiographic image obtaining means for obtaining radiographic image data by radiographing; and an internal power source for supplying power to the cassette communication means and the radiographic image obtaining means, to execute: a console power-OFF information reception determination step of determining whether the cassette communication means receives the console power-OFF information; and a power saving state transition control step of controlling power consumption per unit time of power supplied from the internal power source so as to be lower than that of a radiographable state after the console power-OFF information is received in the console power-OFF information reception determination step. Thus, useless power consumption of the internal power source of the cassette can be suppressed, and a situation where no necessary power is left for radiographing is prevented. Therefore, the overall radiographing efficiency can be improved.

Further, in the console,- the console power supply means stops supplying of power after the console communication means receives the power saving state transition information, and when the power saving state transition control step is executed, the power saving state transition information transmission step of controlling the cassette communication means so as to transmit the power saving state transition information to the console is executed. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, a program causes a computer in a cassette comprising: cassette communication means for communicating with a console comprising console communication means for communicating with the cassette and console power supply means for supplying power to the console communication means, wherein the cassette communication means transmits power saving state transition information to the console when power consumption per unit time of power supplied from the internal power source is lower than that of a radiographable state; radiographic image obtaining means for obtaining-radiographic image data by radiographing; and the internal power source for supplying power to the cassette communication means and the radiographic image obtaining means, to execute: a power saving state transition control step of controlling the power consumption per unit time of power supplied from the internal power source so as to be lower than that of the radiographable state; and a power saving state transition information transmission step of controlling the cassette communication means so as to transmit the power saving state transition information to the console when the power saving state transition control step is executed. Because the console power supply means stops supplying of power after the power consumption per unit time of the power supplied from the internal power source of the cassette is lower than that of the radiographable state, a situation where the console power supply means stops supplying of power in the state of uselessly consuming the power of the internal power source of the cassette can be suppressed.

Further, a radiographic imaging system comprises: a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and the console comprising console communication means for communicating with the cassette, and console power supply means for supplying power to the console communication means, wherein when the radiographic image data which is not transmitted to the console does not exist in the memory, the console power supply means stops supplying of power. Therefore, the risk of losing the radiographic image data during the state in which the console power supply means stops supplying of power to stop the console communication means when the radiographic image data which is not transmitted to the console remains in the memory, is suppressed. Further, originally unnecessary re-radiographing caused by such a loss can be reduced.
Further, when the console power supply means receives an instruction of stopping supplying of power, the console checks whether the radiographic image data which is not transmitted to the console exists in the memory. Thus, the risk of losing the radiographic image data is suppressed more, and originally unnecessary re-radiographing caused by such a loss can be reduced.
The console further comprises console control means for controlling the console communication means and the console power supply means, and wherein when the console power supply means receives the instruction of stopping supplying of power, the console control means checks whether the radiographic image data which is not transmitted to the console exists in the memory before-the console power supply means stops supplying of power. Thus, the risk of losing the radiographing image data is suppressed more, and originally unnecessary re-radiographing caused by such a loss can be reduced.
Further, the console control means causes the consol communication means to transmit console power-OFF start information to the cassette before the console power supply means stops supplying of power, when the cassette communication means receives the console power-OFF start information, the cassette control means causes the cassette communication means to transmit non-transmitted image information relating to whether the radiographic image data which is not transmitted to the console exists in the memory, and the console control means checks whether the radiographic image data which is not transmitted to the console exists in the memory based on the non-transmitted image information received by the console communication means. Thus, the risk of losing the radiographic image data is suppressed more, and originally unnecessary re-radiographing caused by such a loss can be reduced.
Further, the console control means receives or transmits and counts signals relating to the radiographing, and counts radiographic image data received by the console communication means, and the console control means checks whether the radiographic image data which is not transmitted to the console exists in the memory by using the count of the signals relating to the radiographing and the count of the radiographic image data received by the console communication means. Thus, the risk of losing the radiographic image data is suppressed more, and originally unnecessary re-radiographing caused by such a loss can be reduced.
Further, the cassette communication means communicates with the console via radio communication, and the console communication means communicates with the cassette via radio communication. Thus, the risk of losing the radiographic image data is suppressed more, and originally unnecessary re-radiographing caused by such a loss can be reduced.

The cassette further comprises a power source for supplying power to the radiographic image obtaining means, the cassette communication means, and the cassette control means, and is a cableless portable type. Thus, the operability of the cassette is high, and the radiographing efficiency can be improved.

Further, in many cases, the cassette is installed in the radiographing room covered with the radiation shielding member, while the console is installed outside the radiographing room. However, the radiographic imaging system further comprises a radio repeater capable of communicating with the cassette communication means by radio, wherein the console communication means is capable of communicating with the radio repeater via a communication cable. Thus, by installing the radio repeater in the radiographing room, the radio communication can be carried out well between the cassette communication unit and the radio repeater.

Further, in a normal case that the cassette is installed in the radiographing room while the console is installed outside the radiographing room, a radiographer gives an instruction regarding a radiographing position of a subject or the like in the radiographing room when the radiographing is executed, and then moves out of the radiographing room to start the radiographing of the subject, and checks a radiographic image or starts the image processing for the radiographic image data. However, the console is a portable terminal in which the console communication means communicates via the radio repeater and radio communication. Thus, while the radiographer gives an instruction regarding the radiographing position of the subject in the radiographing room, the radiographer can check a radiographic image by the console, or start the image processing for the radiographic image data. Thus, the overall radiographing efficiency of the entire radiographing which repeats the cycle of the radiographing, the checking of the radiographic image, and the image processing can be improved.

Further, before the console power supply means stops supplying of power, power consumption of the cassette per unit time is controlled so as to be lower than that of a radiographable state. Thus, useless power consumption of the internal power source of the cassette can be suppressed, and a situation where no necessary power is left for radiographing is prevented. Therefore, the overall radiographing efficiency can be improved.
Further, a console comprises: console communication means for communicating with a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and console power supply means for supplying power to the console communication means, wherein when the radiographic image data which is not transmitted to the console does not exist in the memory, the console power supply means stops supplying of power. Therefore, a risk of losing the radiographic image data during the state in which the console power supply means stops supplying of power to stop the console communication means when the radiographic image data which is not transmitted to the console remains in the memory, is suppressed. Further, originally unnecessary re-radiographing caused by such a loss can be reduced.
Further, when the console power supply means receives an instruction of stopping supplying of power, it is checked whether the radiographic image data which is not transmitted to the console exists in the memory. Thus, the risk of losing the radiographic image data is suppressed more, and originally unnecessary re-radiographing caused by such a loss can be reduced more.
The console further comprises console control means for controlling the console communication means and the console power supply means, wherein when the console power supply means receives the instruction of stopping supplying of power, the console control means checks whether the radiographic image data which is not transmitted to the console exists in the memory before the console power supply means stops supplying of power. Thus, the risk of losing the radiographic image data is suppressed more, and originally unnecessary re-radiographing caused by such a loss can be reduced more.
Further, when the cassette communication means receives a console power-OFF start signal, the cassette control means causes the cassette communication means to transmit non-transmitted image information relating to whether the radiographic image data which is not transmitted to the console exists in the memory, and the console control means causes the consol communication means to transmit the console power-OFF start information to the cassette before the console power supply means stops supplying of power, and checks whether the radiographic image data which is_not transmitted to the console exists in the memory based on the non-transmitted image information received by the console communication means. Thus, the risk of losing the radiographic image data is suppressed more, and originally unnecessary re-radiographing can be reduced more.
Further, the console control means receives or transmits and counts signals relating to the radiographing, and counts radiographic image data received by the console communication means, and the console control means checks whether the radiographic image data which is not transmitted to the console exists in the memory by using the count of the signals relating to the radiographing and the count of the radiographic image data received by the console communication means. Thus, the risk of losing the radiographic image data is suppressed more, and originally unnecessary re-radiographing caused by such a loss can be reduced more.
Further, the cassette communication means communicates with the console via radio communication, and the console communication means communicates with the cassette via radio communication. The risk of losing the radiographic image data is suppressed, and originally unnecessary re-radiographing caused by such a loss can be reduced.
The cassette further comprises a power source for supplying power to the radiographic image obtaining means, the cassette communication means, and the cassette control means, and is a cableless portable type. Thus, the operability of the cassette is high, and the radiographing efficiency can be improved.
Further, in many cases, the cassette is installed in the radiographing room covered with the radiation shielding member, while the console is installed outside the radiographing room. However, the radiographic imaging system further comprises a radio repeater capable of communicating with the cassette communication means by radio, wherein the console communication means is capable of communicating with the radio repeater via a communication cable. Thus, because the radio repeater is provided and the consol communication unit is capable of communicating with the radio repeater via the communication cable, by installing the radio repeater in the radiographing room, radio communication can be carried out well between the cassette communication unit and the radio repeater.
Further, in a normal case that the cassette is installed in the radiographing room while the console is installed outside the radiographing room, a radiographer gives an instruction regarding a radiographing position of a subject or the like in the radiographing room when the radiographing is executed, and then moves out of the radiographing room to start the radiographing of the subject, and checks a radiographic image or starts the image processing for the radiographic image data. However, the console is a portable terminal in which the console communication means communicates via the radio repeater and radio communication. Thus, while the radiographer gives an instruction regarding the radiographing position of the subject in the radiographing room, the radiographer can check a radiographic image by the console, or start the image processing for the radiographic image data. Thus, the overall radiographing efficiency of the entire radiographing which repeats the cycle of the radiographing, the checking of the radiographic image, and the image processing can be improved.
Further, before the console power supply means stops supplying of power, power consumption of the cassette per unit time is controlled so as to be lower than that of a radiographable state. Thus, useless power consumption of the internal power source of the cassette can be suppressed, and a situation where no necessary power is left for radiographing is prevented. Therefore, the overall radiographing efficiency can be improved.
Further, a console comprises: console communication means for communicating with a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and console power supply means for supplying power to the console communication means, wherein when the radiographic image data which is not transmitted to the console does not exist in the memory, the console power supply means stops supplying of power. Therefore, a risk of losing the radiographic image data during the state in which the console power supply means stops supplying of power to stop the console communication means when the radiographic image data which is not transmitted to the console remains in the memory, is suppressed. Further, originally unnecessary re-radiographing caused by such a loss can be reduced.
Further, when the console power supply means receives an instruction of stopping supplying of power, it is checked whether the radiographic image data which is not transmitted to the console exists in the memory. Thus, the risk of losing the radiographic image data is suppressed more, and originally unnecessary re-radiographing caused by such a loss can be reduced.
The console further comprises console control means for controlling the console communication means and the console power supply means, wherein when the console power supply means receives the instruction of stopping supplying of power, the console control means checks whether the radiographic image data which is not transmitted to the console exists in the memory before the console power supply means stops supplying of power. Thus, the risk of losing the radiographic image data is suppressed more, and originally unnecessary re-radiographing caused by such a loss can be reduced.
Further, when the cassette communication means receives a console power-OFF start signal, the cassette control means causes the cassette communication means to transmit non-transmitted image information relating to whether the radiographic image data which is not transmitted to the console exists in the memory, and the console control means causes the consol communication means to transmit the console power-OFF start information to the cassette before the console power supply means stops supplying of power, and checks whether the radiographic image data which is not transmitted to the console exists in the memory based on the non-transmitted image information received by the console communication means. Thus, the risk of losing the radiographic image data is suppressed more, and originally unnecessary re-radiographing can be reduced.
Further, the console control means receives or transmits signals relating to the radiographing, counts reception or transmission of the signals relating to the radiographing, counts the radiographic image data received by the console communication means, and checks whether the radiographic image data which is not transmitted to the console exists in the memory by using them. Thus, the risk of losing the radiographic image data is suppressed more, and originally unnecessary re-radiographing caused by such a loss can be reduced.
Further, the cassette communication means communicates with the console via radio communication, and the console communication means communicates with the cassette via radio communication. The risk of losing the radiographic image data is suppressed, and originally unnecessary re-radiographing caused by such a loss can be reduced.
Further, in many cases, the cassette is installed in the radiographing room covered with the radiation shielding member, while the console is installed outside the radiographing room. However, the radiographic imaging system further comprises a radio repeater capable of communicating with the cassette communication means by radio, wherein the console communication means is capable of communicating with the radio repeater via a communication cable. Thus, by installing the radio repeater in the radiographing room, the radio communication can be carried out well between the cassette communication unit and the radio repeater.
Further, in a normal case that the cassette is installed in the radiographing room while the console is installed outside the radiographing room, a radiographer gives an instruction regarding a radiographing position of a subject or the like in the radiographing room when the radiographing is executed, and then moves out of the radiographing room to start the radiographing of the subject, and checks a radiographic image or starts the image processing for the radiographic image data. However, it is a portable terminal in which the console communication means communicates via the radio repeater and radio communication. Thus, while the radiographer gives an instruction regarding the radiographing position of the subject in the radiographing room, the radiographer can check a radiographic image by the console, or start the image processing for the radiographic image data. Thus, the overall radiographing efficiency of the entire radiographing which repeats the cycle of the radiographing, the checking of the radiographic image, and the image processing can be improved.
Further, before the console power supply means stops supplying of power, power consumption of the cassette per unit time is controlled so as to be lower than that of a radiographable state. Thus, useless power consumption of the internal power source of the cassette can be suppressed, and a situation where no necessary power is left for radiographing is prevented. Therefore, the overall radiographing efficiency can be improved.
A program causes a computer of a console comprising: console communication means for communicating with a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and console power supply means for supplying power to the console communication means, to execute: a residual data checking step of checking whether the radiographic image data which is not transmitted to the console exists in the memory; and a power stopping step of controlling the console power supply means to stop supplying power when it is checked that the radiographic image data which is not transmitted to the console does not exist in the memory. Thus, in a state where radiographic image data nontransmitted to the console remains in the memory of the cassette, the console power supply means stops supplying of power to stop the console communication means. Therefore, the risk of losing the radiographic image data during the state in which the console power supply means stops supplying of power to stop the console communication means when the radiographic image data which is not transmitted to the console remains in the memory, is suppressed. Further, originally unnecessary re-radiographing caused by such a loss can be reduced.
Further, the residual data checking step is started when the console power supply means receives an instruction of stopping supplying of power. Thus, the risk of losing the radiographic image data is suppressed more, and originally unnecessary re-radiographing caused by such a loss can be reduced more.

The entire disclosure of Japanese Patent Application No. 2005-88840 filed on March 25, 2005, including specification, claims, drawings and summary are incorporated herein by reference in its entirety.

### Industrial Applicability

As described above, the present invention can be applicable to a field where the radiographic imaging is carried out, especially in a medical field.

### Explanation of Reference Numerals

- 1000: X-ray imaging system
- 1: Console
- 11: Display control unit
- 13: Console control unit
- 14: Console communication unit
- 17: Console power source unit
- 3: Display unit
- 5: Cassette
- 51: Internal power source
- 52: Cassette communication unit
- 53: Cassette control unit
- 54: Panel
- 542: Photodetector
- 5421: Collection electrode
- 543: Scanning drive circuit
- 546: Memory
- 6: Radio repeater

## Claims

1. A radiographic imaging system comprising:
a cassette comprising cassette communication means for communicating with a console, radiographic image obtaining means for obtaining radiographic image data by radiographing, and an internal power source for supplying power to the cassette communication means and the radiographic image obtaining means; and
the console comprising console communication means for communicating with the cassette communication means, and console power supply means for supplying power to the console communication means, wherein:
the console control means causes the console communication means to transmit console power-OFF information to the cassette before the console power supply means stops supplying of power, and
when the cassette communication means receives the console power-OFF information, power consumption per unit time of power supplied from the internal power source is controlled so as to be lower than that of a radiographable state.

2. The radiographic imaging system of claim 1,
wherein:
when the power consumption per unit time of power supplied from the internal power source is lower than that of the radiographable state, the cassette communication means transmits power saving state transition information to the console, and
after the console communication means receives the power saving state transition information, the console power supply means stops supplying of power.

3. The radiographic imaging system of claim 1 or 2,
wherein:
the cassette further comprises cassette control means for controlling the radiographic image obtaining means, the cassette communication means, and the internal power source,
the console further comprises console control means for controlling the console communication means and the console power supply means,
the console control means controls the console communication means to transmit the console power-OFF information to the cassette before the console power supply means stops supplying of power, and
when the cassette communication means receives the console power-OFF information, the cassette control means controls the power consumption per unit time of power supplied from the internal power source so as to be lower than that of the radiographable state.

4. The radiographic imaging system of claim 3,
wherein:
when the cassette control means controls the power consumption per unit time of power supplied from the internal power source so as to be lower than that of the radiographable state, the cassette control means causes the cassette communication means to transmit power saving state transition information to the console, and
after the console communication means receives the power saving state transition information, the console control means controls the console power supply means to stop supplying of power.

5. A radiographic imaging system comprising:
a cassette comprising cassette communication means for communicating with a console, radiographic image obtaining means for obtaining radiographic image data by radiographing, and an internal power source for supplying power to the cassette communication means and the radiographic image obtaining means; and
the console comprising console communication means for communicating with the cassette, and console power supply means for supplying power to the console communication means,
wherein:
when power consumption per unit time of power supplied from the internal power source is lower than that of a radiographable state, the cassette communication means transmits power saving state transition information to the console, and
after the console communication means receives the power saving state transition information, the console power supply means stops supplying of power.

6. The radiographic imaging system of claim 5,
wherein:
the cassette further comprises cassette control means for controlling the radiographic image obtaining means, the cassette communication means, and the internal power source,
the console further comprises console control means for controlling the console communication means and the console power supply means,
when the cassette control means controls the power consumption per unit time of power supplied from the internal power source so as to be lower than that of a radiographable state, the cassette control means causes the cassette communication means to transmit the power saving state transition information to the console, and
after the console communication means receives the power saving state transition information, the console control means controls the console power supply means to stop supplying of power.

7. The radiographic imaging system of any one of claims 3, 4 and 6, wherein:
the cassette control means causes the cassette communication means to transmit power supply state information indicating a state of power supplying to the radiographic image obtaining means to the console, and
the console control means of the console controls the console power supply means according to the power supply state information received by the console communication means.

8. The radiographic imaging system of claim 7,
wherein the console control means causes display means to execute displaying according to the power supply state information received by the console communication means.

9. The radiographic imaging system of any one of claims 1 to 8, wherein:
the cassette is a cableless portable type, and
the cassette communication means and the console communication means communicate with each other via radio communication.

10. The radiographic imaging system of claim 9,
wherein the console communication means is connected with a cable to a radio repeater which communicates with the cassette communication means by radio.

11. The radiographic imaging system of any one of claims 1 to 10, wherein:
the radiographic image obtaining means comprises voltage application means for applying a voltage to a plurality of pixels, and the plurality of pixels for generating charges according to a radiation dose in a state in which the voltage is applied by the voltage application means, and
the voltage is substantially applied to the plurality of pixels in the radiographable state, and the voltage is not substantially applied to the plurality of pixels in the state in which the power consumption per unit time is lower than that of the radiographable state.

12. The radiographic imaging system of any one of claims 1 to 11,
wherein a state in which the power consumption per unit time is lower than that of the radiographable state is a state in which a function necessary for starting up according to an instruction from the console is left, and supplying of power from the console to the radiographic image obtaining means is stopped.

13. The radiographic imaging system of any one of claims 1 to 12,
wherein the cassette further comprises a memory in which power supplied from the internal power source is received to temporarily store radiographic image data obtained by the radiographic image obtaining means and transmitted by the cassette communication means.

14. A console comprising:
console communication means comprising cassette communication means for communicating with the console, radiographic image obtaining means for obtaining radiographic image data by radiographing, and an internal power source for supplying power to the cassette communication means and the radiographic image obtaining means, the console communication means communicating with a cassette in which power consumption per unit time of power supplied from the internal power source is lower than that of a radiographable state when the cassette communication means receives console power-OFF information; and
console power supply means for supplying power to the console communication means,
wherein the console communication means transmits the console power-OFF information to the cassette before the console power supply means stops supplying of power.

15. The console of claim 14,
wherein in case of communicating with the cassette in which the cassette communication means transmits power saving state transition information to the console when the power consumption per unit time of power supplied from the internal power source is lower than-that of the radiographable state, the console power supply means stops supplying of power after the console communication means receives the power saving state transition information.

16. A console comprising:
console communication means comprising cassette communication means for communicating with the console, radiographic image obtaining means for obtaining radiographic image data by radiographing, and an internal power source for supplying power to the cassette communication means and the radiographic image obtaining means, the console communication means communicating with a cassette in which the cassette communication means transmits power saving state transition information to the console when power consumption per unit time of power supplied from the internal power source is lower than that of a radiographable state; and
console power supply means for supplying power to the console communication means,
wherein the console power supply means stops supplying of power after the console communication means receives the power saving state transition information.

17. The console of any one of claims 14 to 16,
wherein:
the cassette causes the cassette communication means to transmit power supply state information indicating a state of power supplying to the radiographic image obtaining means to the console, and
the console controls the console power supply means according to the power supply state information received by the console communication means.

18. The console of claim 17,
wherein display means is caused to execute displaying according to the power supply state information received by the console communication means.

19. The console of any one of claims 14 to 18,
wherein:
the cassette is a cableless portable type, and
the cassette communication means and the console communication means communicate with each other via radio communication.

20. The console of claim 19,
wherein the console communication means is connected with a cable to a radio repeater which communicates with the cassette communication means by radio.

21. A computer readable program for causing a computer comprising: console communication means for communicating with a cassette comprising cassette communication means for communicating with a console, radiographic image obtaining means for obtaining radiographic image data by radiographing, and an internal power source for supplying power to the cassette communication means and the radiographic image obtaining means, wherein power consumption per unit time of power supplied from the internal power source is lower than that of a radiographable state when the cassette communication means receives console power-OFF information; and console power supply means for supplying power to the console communication means, to execute:
a console power-OFF step of controlling the console power supply means so as to stop supplying of power; and
a power-OFF information transmission step of controlling the console communication means so as to transmit the console power-OFF information to the cassette before the console power-OFF step.

22. The program of claim 21, further causing the computer to execute:
a power saving state transition information reception determination step of determining whether the console communication means receives the power saving state transition information,
wherein the console power-OFF step is executed after it is determined that the power saving state transition information is received in the power saving state transition information reception determination step.

23. A program for causing a computer comprising:
console communication means for communicating with a cassette comprising cassette communication means for communicating with a console, radiographic image obtaining means for obtaining radiographic image data by radiographing, and an internal power source for supplying power to the cassette communication means and the radiographic image obtaining means, wherein the cassette communication means transmits power saving state transition information to the console when power consumption per unit time of power supplied from the internal power source is lower than that of a radiographable state; and console power supply means for supplying power to the console communication means, to execute:
a power saving state transition information reception determination step of determining whether the console communication means receives the power saving state transition information; and
a console power-OFF step of controlling the console power supply means so as to stop supplying of power after it is determined that the power saving state transition information is received in the power saving state transition information reception determination step.

24. A cassette comprising:
cassette communication means for communicating with a console comprising console communication means for communicating with the cassette communication means and console power supply means for supplying power to the console communication means, wherein the console control means causes the console communication means to transmit console power-OFF information to the cassette before the console power supply means stops supplying of power;
radiographic image obtaining means for obtaining radiographic image data by radiographing; and
an internal power source for supplying power to the cassette communication means and the radiographic image obtaining means,
wherein when the cassette communication means receives the console power-OFF information, the internal power source is controlled so that power consumption per unit time of power supplied from the internal power source is lower than that of a radiographable state.

25. The cassette of claim 24, wherein:
in the console, the console power supply means stops supplying of power after the console communication means receives the power saving state transition information, and
the cassette communication means transmits the power saving state transition information to the console when the power consumption per unit time of power supplied from the internal power source is lower than that of the radiographable state.

26. A cassette comprising:
cassette communication means for communicating with a console comprising console communication means for communicating with a cassette and console power supply means for supplying power to the console communication means, wherein the cassette communication means transmits power saving state transition information to the console when power consumption per unit time of power supplied from an internal power source is lower than that of a radiographable state;
radiographic image obtaining means for obtaining radiographic image data by radiographing; and
the internal power source for supplying power to the cassette communication means and the radiographic image obtaining means,
wherein the console power supply means stops supplying of power after the console communication means receives the power saving state transition information.

27. The cassette of any one of claims 24 to 26,
wherein:
the console controls the console power supply means according to the power supply state information received by the console communication means, and
the cassette communication means transmits power supply state information indicating a state of power supplying to the radiographic image obtaining means to the console.

28. The cassette of any one of claims 24 to 27,
wherein:
the cassette is a cableless portable type, and
the cassette communication means and the console communication means communicate with each other via radio communication.

29. The cassette of any one of claims 24 to 28,
wherein:
the radiographic image obtaining means comprises voltage application means for applying a voltage to a plurality of pixels, and the plurality of pixels for generating charges according to a radiation dose in a state in which the voltage is applied by the voltage application means, and
the voltage is substantially applied to the plurality of pixels in the radiographable state, and the voltage is not substantially applied to the plurality of pixels in the state in which the power consumption per unit time is lower than that of the radiographable state.

30. The cassette of any one of claims 24 to 29,
wherein a state in which the power consumption per unit time is lower than that of the radiographable state is a state in which a function necessary for starting up according to an instruction from the console is left, and supplying of power from the console to the radiographic image obtaining means is stopped.

31. The cassette of any one of claims 24 to 30, further comprising a memory in which power supplied from the internal power source is received to temporarily store radiographic image data obtained by the radiographic image obtaining means and transmitted by the cassette communication means.

32. A program for causing a computer in a cassette comprising: cassette communication means for communicating with a console comprising console communication means for communicating with the cassette communication means and console power supply means for supplying power to the console communication means, wherein consol control means causes the console communication means to transmit console power-OFF information to the cassette before the console power supply means stops supplying of power;
radiographic image obtaining means for obtaining radiographic image data by radiographing; and
an internal power source for supplying power to the cassette communication means and the radiographic image obtaining means, to execute:
a console power-OFF information reception determination step of determining whether the cassette communication means receives the console power-OFF information; and
a power saving state transition control step of controlling power consumption per unit time of power supplied from the internal power source so as to be lower than that of a radiographable state after the console power-OFF information is received in the console power-OFF information reception determination step.

33. The program of claim 32, wherein:
in the console, the console power supply means stops supplying of power after the console communication means receives the power saving state transition information, and
when the power saving state transition control step is executed, the power saving state transition information transmission step of controlling the cassette communication means so as to transmit the power saving state transition information to the console is executed.

34. A program for causing a computer in a cassette comprising: cassette communication means for communicating with a console comprising console communication means for communicating with the cassette and console power supply means for supplying power to the console communication means, wherein the cassette communication means transmits power saving state transition information to the console when power consumption per unit time of power supplied from the internal power source is lower than that of a radiographable state;
radiographic image obtaining means for obtaining radiographic image data by radiographing; and
the internal power source for supplying power to the cassette communication means and the radiographic image obtaining means, to execute:
a power saving state transition control step of controlling the power consumption per unit time of power supplied from the internal power source so as to be lower than that of the radiographable state; and
a power saving state transition information transmission step of controlling the cassette communication means so as to transmit the power saving state transition information to the console when the power saving state transition control step is executed.

35. A radiographic imaging system comprising:
a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and
the console comprising console communication means for communicating with the cassette, and console power supply means for supplying power to the console communication means,
wherein when the radiographic image data which is not transmitted to the console does not exist in the memory, the console power supply means stops supplying of power.

36. The radiographic imaging system of claim 35,
wherein when the console power supply means receives an instruction of stopping supplying of power, the console checks whether the radiographic image data which is not transmitted to the console exists in the memory.

37. The radiographic imaging system of claim 36,
wherein the console further comprises console control means for controlling the console communication means and the console power supply means, and wherein when the console power supply means receives the instruction of stopping supplying of power, the console control means checks whether the radiographic image data which is not transmitted to the console exists in the memory before the console power supply means stops supplying of power.

38. The radiographic imaging system of claim 37,
wherein:
the console control means causes the consol communication means to transmit console power-OFF start information to the cassette before the console power supply means stops supplying of power,
when the cassette communication means receives the console power-OFF start information, the cassette control means causes the cassette communication means to transmit non-transmitted image information relating to whether the radiographic image data which is not transmitted to the console exists in the memory, and
the console control means checks whether the radiographic image data which is not transmitted to the console exists in the memory based on the non-transmitted image information received by the console communication means.

39. The radiographic imaging system of claim 37,
wherein:
the console control means receives or transmits and counts signals relating to the radiographing, and counts radiographic image data received by the console communication means, and
the console control means checks whether the radiographic image data which is not transmitted to the console exists in the memory by using the count of the signals relating to the radiographing and the count of the radiographic image data received by the console communication means.

40. The radiographic imaging system of any one of claims 35 to 39, wherein:
the cassette communication means communicates with the console via radio communication, and
the console communication means communicates with the cassette via radio communication.

41. The radiographic imaging system of claim 40,
wherein the cassette further comprises a power source for supplying power to the radiographic image obtaining means, the cassette communication means, and the cassette control means, and is a cableless portable type.

42. The radiographic imaging system of claim 40 or 41, further comprising a radio repeater capable of communicating with the cassette communication means by radio,
wherein the console communication means is capable of communicating with the radio repeater via a communication cable.

43. The radiographic imaging system of any one of claims 35 to 42,
wherein the console is a portable terminal in which the console communication means communicates via the radio repeater and radio communication.

44. The radiographic imaging system of any one of claims 35 to 43,
wherein before the console power supply means stops supplying of power, power consumption of the cassette per unit time is controlled so as to be lower than that of a radiographable state.

45. A console comprising:
console communication means for communicating with a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and
console power supply means for supplying power to the console communication means,
wherein when the radiographic image data which is not transmitted to the console does not exist in the memory, the console power supply means stops supplying of power.

46. The console of claim 45,
wherein when the console power supply means receives an instruction of stopping supplying of power, it is checked whether the radiographic image data which is not transmitted to the console exists in the memory.

47. The console of claim 46, further comprising console control means for controlling the console communication means and the console power supply means,
wherein when the console power supply means receives the instruction of stopping supplying of power, the console control means checks whether the radiographic image data which is not transmitted to the console exists in the memory before the console power supply means stops supplying of power.

48. The console of claim 47, wherein:
when the cassette communication means receives a console power-OFF start signal, the cassette control means' causes the cassette communication means to transmit non-transmitted image information relating to whether the radiographic image data which is not transmitted to the console exists in the memory, and
the console control means causes the consol communication means to transmit the console power-OFF start information to the cassette before the console power supply means stops supplying of power, and checks whether the radiographic image data which is not transmitted to the console exists in the memory based on the non-transmitted image information received by the console communication means.

49. The console of claim 47,
wherein the console control means receives or transmits signals relating to the radiographing, counts reception or transmission of the signals relating to the radiographing, counts the radiographic image data received by the console communication means, and checks whether the radiographic image data which is not transmitted to the console exists in the memory by using them.

50. The console of any one of claims 45 to 49,
wherein:
the cassette communication means communicates with the console via radio communication, and
the console communication means communicates with the cassette via radio communication.

51. The console of claim 50, further comprising a radio repeater capable of communicating with the cassette communication means by radio,
wherein the console communication means is capable of communicating with the radio repeater via a communication cable.

52. The console of claim 51,
wherein the console is a portable terminal in which the console communication means communicates via the radio repeater and radio communication.

53. The console of any one of claims 45 to 52,
wherein before the console power supply means stops supplying of power, power consumption of the cassette per unit time is controlled so as to be lower than that of a radiographable state.

54. A program for causing a computer of a console comprising: console communication means for communicating with a cassette comprising radiographic image obtaining means for obtaining radiographic image data by radiographing, a memory for storing the radiographic image data obtained by the radiographic image obtaining means, and cassette communication means for communicating the radiographic image data stored in the memory with the console; and
console power supply means for supplying power to the console communication means, to execute:
a residual data checking step of checking whether the radiographic image data which is not transmitted to the console exists in the memory; and
a power stopping step of controlling the console power supply means to stop supplying power when it is checked that the radiographic image data which is not transmitted to the console does not exist in the memory.

55. The program of claim 54,
wherein the residual data checking step is started when the console power supply means receives an instruction of stopping supplying of power.
